# EUROPEAN PATENT APPLICATION

(11) **EP 4 804 276 A1**
(43) Date of publication of application: **09.09.2026**
(21) Application number: 24887644.3
(22) Date of filing: 19.09.2024
(51) Int. Cl.: H01M 10/0567, H01M 10/054

(54) **ELECTROLYTE, SODIUM SECONDARY BATTERY AND ELECTRIC DEVICE**

(30) Priority: 09.11.2023 CN 202311486877
(71) Applicant: Contemporary Amperex Technology Co., Limited, Ningde, Fujian 352100 (CN)
(72) Inventor: WU, Kai, Ningde, Fujian 352100 (CN); ZOU, Hailin, Ningde, Fujian 352100 (CN); TIE, Zhiwei, Ningde, Fujian 352100 (CN); CHEN, Peipei, Ningde, Fujian 352100 (CN)
(74) Representative: Lorenz Seidler Gossel Part. mbB
(86) International application number: PCT/CN2024/119823
(87) International publication number: WO 2025/098026

(57) **Abstract**

An electrolyte, a sodium secondary battery and an electric device. The electrolyte comprises a first additive, a second additive and a third additive, wherein the first additive comprises a cyclic ester compound containing a sulfuric acid group and/or a sulfurous acid group, the second additive comprises a difluorooxalate borate, and the third additive comprises a sultone compound containing a carbon-carbon double bond. The first additive, the second additive and the third additive are used in cooperation, such that not only can the stability of an SEI membrane be effectively improved, but a stable CEI membrane can also be formed, greatly reducing the gas production degree during a cycling process and storage process of a sodium secondary battery, thereby improving the storage performance, quick charge performance and cycling performance of the sodium secondary battery.

## Description

### CROSS-REFERENCE TO RELATED APPLICATIONS

The present application claims priority to Chinese Patent Application No. 202311486877.1 filed on November 9, 2023 and entitled "ELECTROLYTE, SODIUM SECONDARY BATTERY AND ELECTRIC DEVICE", which is incorporated herein by reference in its entirety.

### TECHNICAL FIELD

The present application relates to the technical field of sodium batteries, and particularly to an electrolyte, a sodium secondary battery, and an electric device.

### BACKGROUND

In recent years, secondary batteries are widely applied in energy storage power systems such as hydropower stations, thermal power stations, wind power stations, and solar power stations, as well as various fields such as electric tools, electric bicycles, electric motorcycles, electric vehicles, military equipment, and aerospace.

Compared with lithium secondary batteries, sodium secondary batteries present greater competitive advantages, owing to the abundant sodium resources with wide distribution. However, the gas evolution problem existing in sodium secondary batteries seriously affects electrical performance of the battery, and cannot meet application demands of a new generation electrochemical system.

### SUMMARY

The present application is made in view of the above problems, and an object thereof is to provide an electrolyte aimed at effectively improving the stability of the SEI film and the formation of the CEI film, greatly reducing the degree of gas evolution during the cycling and storage processes of the sodium secondary battery, and thereby improving the storage performance, fast-charging performance and cycling performance of the sodium secondary battery.

A first aspect of the present application provides an electrolyte for a sodium secondary battery, including a first additive, a second additive, and a third additive, where the first additive includes a cyclic ester compound containing a sulfate group and/or a sulfite group, the second additive includes difluoro(oxalato)borate, and the third additive includes a sultone compound containing a carbon-carbon double bond.

The first additive including the cyclic ester compound containing a sulfate group and/or a sulfite group and/or the second additive including difluoro(oxalato)borate can be reduced at a negative electrode prior to the solvent to form a film, and generate components containing a sulfate group and/or a sulfite group and other components containing a borate in an SEI film. The synergistic action of the two additives can not only improve the stability of the interfacial SEI film, reduce the degree of oxidative gas evolution of the SEI film during a discharge process, but also lower the dissolution degree of the interfacial SEI film in the electrolyte to a certain extent, and reduce the degree of gas evolution induced by a reaction between the solvent in the electrolyte and the negative electrode sheet due to the exposure of the negative electrode sheet resulting from the dissolution of the SEI film. Meanwhile, the third additive including the sultone compound containing a carbon-carbon double bond is further introduced into the electrolyte. The sultone compound containing a carbon-carbon double bond can preferentially undergo an oxidative polymerization reaction on the surface of the positive electrode sheet to form a CEI film including a sulfur-containing polymer that covers the surface of the positive electrode sheet, thereby hindering the direct contact between the positive electrode sheet and the electrolyte. On the one hand, it reduces the degree of gas evolution caused by side reactions between the solvent in the electrolyte and the positive electrode sheet; on the other hand, it can also reduce the degree of side reactions with the negative electrode sheet, which are caused by RH⁺ generated by the catalytic oxidation of transition metals in the layered transition metal oxide migrating to the negative electrode sheet side and depositing on the negative electrode sheet side, further reduce gas evolution on the negative electrode sheet side, and comprehensively improve the storage performance, fast-charging performance and cycling performance of the sodium secondary battery.

In any embodiment, the cyclic ester compound containing a sulfate group and/or a sulfite group includes at least one of a compound with a structure represented by Formula I-1 and a compound with a structure represented by Formula I-2: 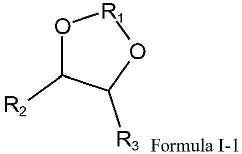 and 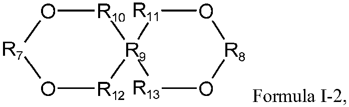 where
in Formula I-1, R₁ includes 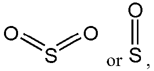 R₂ and R₃ are each independently selected from at least one of 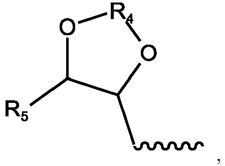 a hydrogen atom, C1-C6 alkyl, a halogen atom, C1-C3 haloalkyl, C1-C3 alkoxy, C1-C3 haloalkoxy, C1-C3 alkenyl, ester group, cyano group, and sulfonic acid group, at least one of R₂ and R₃ includes 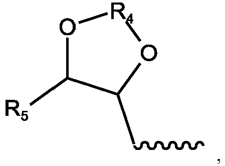 R₄ includes at least one of 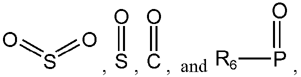 and R₅ and R₆ are each independently selected from at least one of 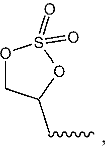 a hydrogen atom, C1-C6 alkyl, a halogen atom, C1-C3 haloalkyl, C1-C3 alkoxy, C1-C3 haloalkoxy, C1-C3 alkenyl, ester group, cyano group, and sulfonic acid group; and
in Formula I-2, R₇ includes 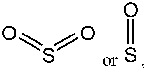 R₈ includes at least one of 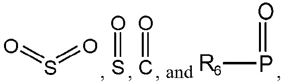 R₉ includes at least one of C, C-R₁₄-C, and 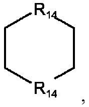 R₁₄ includes at least one of a single bond, C1-C6 alkyl, C1-C6 ether group, and C1-C3 alkoxy, and R₁₀, R₁₁, R₁₂, and R₁₃ are each independently selected from at least one of a single bond and C1-C3 alkylene.

The cyclic ester compounds containing a sulfate group and/or a sulfite group can generate components containing a sulfate group and/or a sulfite group in the SEI film, and the SEI film containing the component can cover the surface of the negative electrode sheet to reduce the degree of exposure of the negative electrode sheet to the electrolyte, reduce side reactions and gas evolution, and improve the performance of the sodium secondary battery.

In any embodiment, the difluoro(oxalato)borate includes a compound represented by Formula II:

(F₂C₂O₄B)_{y}M^{y+} Formula II,

where
in Formula II, M^{y+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, Ni³⁺, and y=1, 2, or 3.

The above difluoro(oxalato)borates can all generate other components containing borate in the SEI film, which can improve the overall stability of the SEI film on the surface of the negative electrode sheet, reduce the degree of oxidative decomposition of the integral SEI film, and lower the solubility of the integral SEI film in the electrolyte solvent to a certain extent, thereby improving the storage performance of the sodium secondary battery.

In any embodiment, the sultone compound containing a carbon-carbon double bond includes a compound with a structure represented by Formula III: 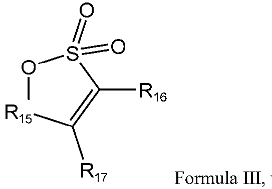 where
in Formula III, R₁₅ includes at least one of alkylene, alkoxy, carbonyl, and haloalkylene, and R₁₆ and R₁₇ are each independently selected from at least one of a hydrogen atom, C1-C6 alkyl, a halogen atom, C1-C3 haloalkyl, C1-C3 alkoxy, C1-C3 haloalkoxy, phenyl, amino, amine group, silyl group, C1-C3 alkenyl, ester group, cyano group, and sulfonic acid group.

The above sultone compounds containing a carbon-carbon double bond can all form a CEI film containing a sulfur-containing polymer on the positive electrode sheet side that covers the surface of the positive electrode sheet, thereby hindering the direct contact between the positive electrode sheet and the electrolyte. On the one hand, it reduces the degree of gas evolution caused by side reactions between the solvent in the electrolyte and the positive electrode sheet; on the other hand, it can also reduce the degree of side reactions with the negative electrode sheet, which are caused by RH⁺ generated by the catalytic oxidation of transition metals in the layered transition metal oxide migrating to the negative electrode sheet side and depositing on the negative electrode sheet side. Meanwhile, it reduces gas evolution on the positive electrode sheet side and the negative electrode sheet side, and comprehensively improves the storage performance and cycling performance of the sodium secondary battery.

In any embodiment, in Formula I-1, R₁ includes 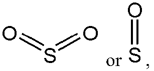 R₂ and R₃ are each independently selected from at least one of 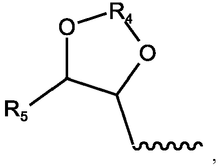 a hydrogen atom, C1-C6 alkyl, and a halogen atom, at least one of R₂ and R₃ includes 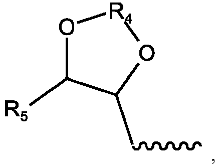 R₄ includes at least one of 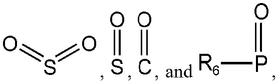 and R₅ and R₆ are each independently selected from at least one of a hydrogen atom, C1-C6 alkyl, and a halogen atom; and/or
in Formula I-2, R₇ includes 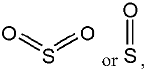 R₈ includes at least one of 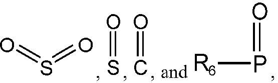 R9 includes at least one of C and C-R₁₄-C, R₁₄ includes at least one of a single bond, C1-C6 alkyl, and C1-C6 ether group, and R₁₀, R₁₁, R₁₂, and R₁₃ are each independently selected from at least one of a single bond and C1-C3 alkylene.

In any embodiment, the cyclic ester compound containing a sulfate group and/or a sulfite group includes at least one of 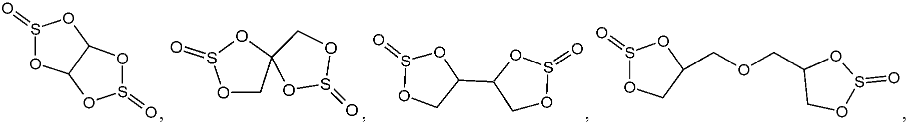 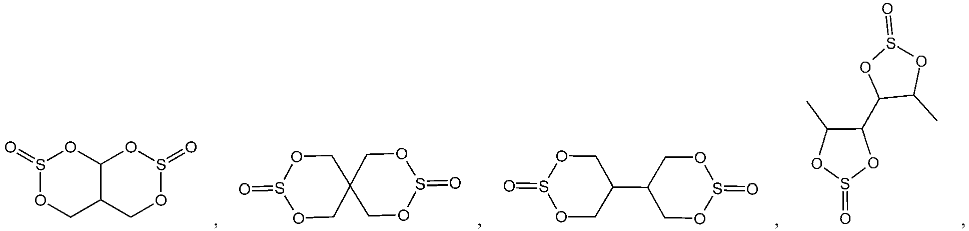 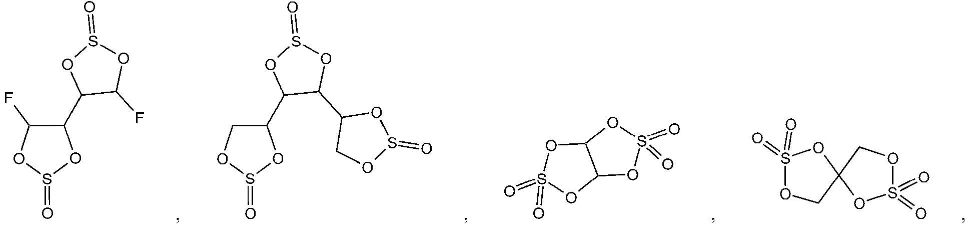 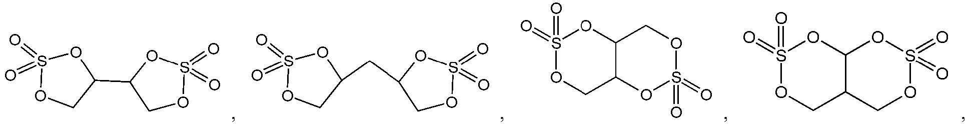 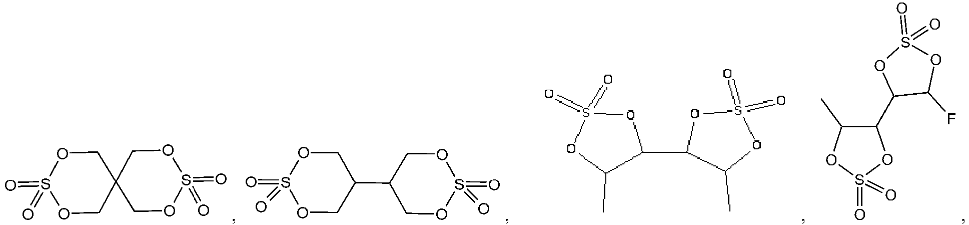 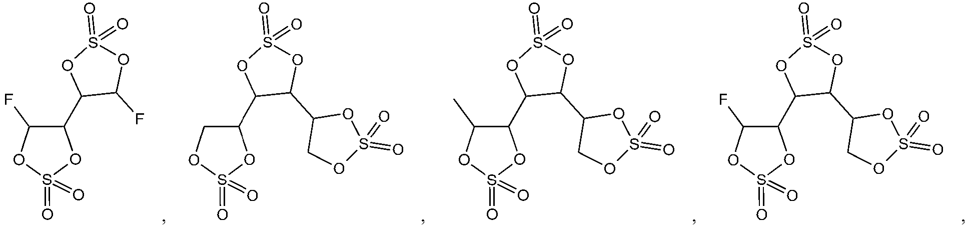 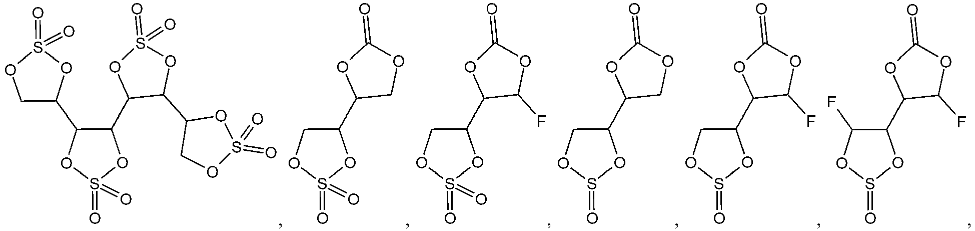 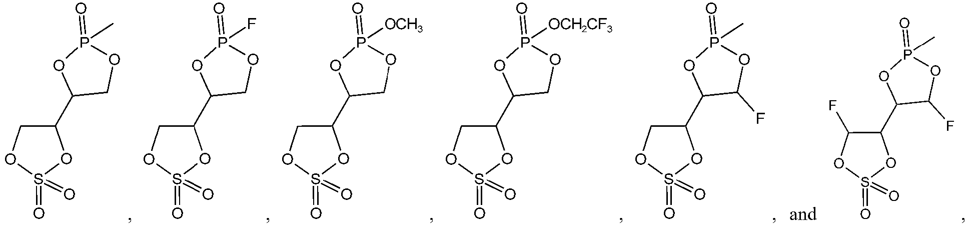 optionally includes at least one of

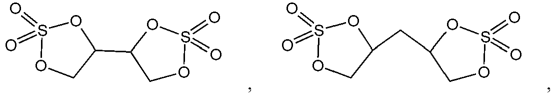

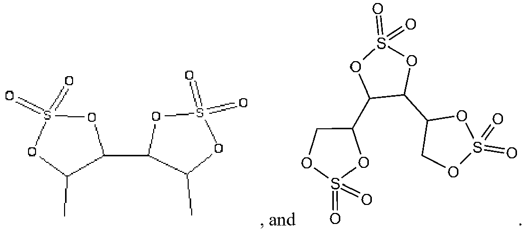

The above substances serving as the first additive can all be dissolved in the electrolyte, and form a dense SEI film during the charging process to cover the surface of the negative electrode sheet, so as to reduce the degree of exposure of the negative electrode sheet to the electrolyte, reduce side reactions and gas evolution, and improve the performance of the sodium secondary battery. In addition, compared with the compound having the structure shown in 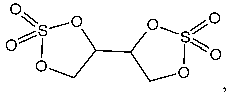 other compounds possess a more stable structure, so that the sodium secondary battery has better cycling performance.

In any embodiment, in Formula II, M^{y+} includes at least one of Li⁺ and Na⁺.

Li⁺ or Na⁺ has a smaller ionic radius, which enables sodium difluoro(oxalato)borate or lithium difluoro(oxalato)borate to have higher solubility, thereby reducing the influence brought by the addition of the second additive on the conductivity of the electrolyte.

In any embodiment, in Formula III, R₁₅ includes at least one of alkylene, carbonyl, and haloalkylene, and R₁₆ and R₁₇ are each independently selected from at least one of a hydrogen atom, C1-C6 alkyl, a halogen atom, C1-C3 alkoxy, phenyl, amino, and silyl group.

In any embodiment, the structure represented by Formula III includes at least one of

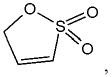

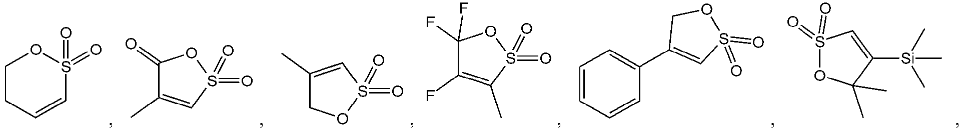

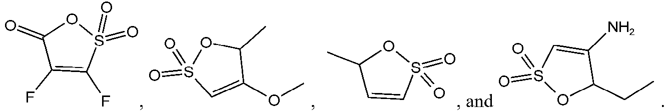

The above sultone compounds containing a carbon-carbon double bond can all be dissolved in the electrolyte, which reduces the influence brought by the addition of the sultone compound containing a carbon-carbon double bond as an additive on the ionic conductivity of the electrolyte.

In any embodiment, a mass ratio of the cyclic ester compound containing a sulfate group and/or a sulfite group to the difluoro(oxalato)borate is 0.2 to 500, optionally 1 to 100.

Controlling the mass ratio of the cyclic ester compound containing a sulfate group and/or a sulfite group to difluoro(oxalato)borate within a proper range can not only relieve the aggravation of gas evolution caused by intensified oxidative decomposition of the integral SEI film, during cycling but also avoid the fracture of the SEI film in the cycling process resulted from insufficient toughness of the integral SEI film which would otherwise seriously deteriorate cycling performance. A proper ratio range can balance the storage performance and cycling performance of the sodium secondary battery, so as to comprehensively optimize the performance of the sodium secondary battery. Further controlling the mass ratio of the cyclic ester compound containing a sulfate group and/or a sulfite group to the difluoro(oxalato)borate to be 0.2 to 100 or 1 to 100 helps to further balance the storage performance and cycling performance of the sodium secondary battery.

In any embodiment, based on a total mass of the electrolyte, a sum of mass percentages of the cyclic ester compound containing a sulfate group and/or a sulfite group and the sultone compound containing a carbon-carbon double bond is 0.1% to 6%, optionally 0.5% to 5%.

Controlling the sum of the mass percentages of the cyclic ester compound containing a sulfate group and/or a sulfite group and the sultone compound containing a carbon-carbon double bond within a proper range balances the storage performance and fast-charging performance of the sodium secondary battery.

In any embodiment, a mass ratio of the difluoro(oxalato)borate to the sultone compound containing a carbon-carbon double bond is 0.2 to 100, optionally 1 to 50.

Controlling the mass ratio of the difluoro(oxalato)borate to the sultone compound containing a carbon-carbon double bond within a proper range can not only reduce the adverse effect on cycling performance caused by limited improvement of the overall solubility of an SEI film, but also lower the sodium plating risk caused by an excessively high proportion of the sultone compound containing a carbon-carbon double bond, so as to comprehensively improve the performance of the sodium secondary battery. Further controlling the mass ratio of the difluoro(oxalato)borate to the sultone compound containing a carbon-carbon double bond to be 0.1 to 50 or 1 to 50 helps to further improve the cycling performance of the sodium secondary battery.

In any embodiment, based on the total mass of the electrolyte, a product of mass percentages of the cyclic ester compound containing a sulfate group and/or a sulfite group, the difluoro(oxalato)borate, and the sultone compound containing a carbon-carbon double bond is 0.005×10⁻⁶ to 10×10⁻⁶, optionally 0.01×10⁻⁶ to 5×10⁻⁶.

Controlling the product of the mass percentages of the cyclic ester compound containing a sulfate group and/or a sulfite group, difluoro(oxalato)borate, and the sultone compound containing a carbon-carbon double bond within a proper range can not only reduce the influence caused by an excessively low mass percentage of any one of the three additives on the degree of gas evolution, but also reduce the influence caused by an excessively high mass percentage of any one of the three additives on the direct-current impedance and fast-charging performance of the sodium secondary battery, so as to comprehensively improve the performance of the sodium secondary battery.

In any embodiment, based on the total mass of the electrolyte, a mass percentage of the cyclic ester compound containing a sulfate group and/or a sulfite group is 0.01% to 5%, optionally 0.1% to 3%.

Controlling the mass percentage of the cyclic ester compound containing a sulfate group and/or a sulfite group within a proper range helps to form components containing a sulfate group and/or a sulfite group in the SEI film, reduce the fracture degree of the integral SEI film induced by the swelling of the sodium secondary battery during cycling, so as to enhance the protection capability of the integral SEI film and improve the storage performance of the sodium secondary battery. In addition, it can also reduce the degree of aggravated gas evolution induced by the oxidative decomposition of excessive cyclic ester compound on the positive electrode sheet side when the mass percentage of the cyclic ester compound is excessively high, as well as reduce the degree of performance deterioration of the sodium secondary battery, which is aggravated by the increase of interfacial resistance of the positive electrode sheet owing to the accumulation of oxidative decomposition products on the surface of the positive electrode sheet. Further controlling the mass percentage of the cyclic ester compound to be 0.1% to 2% helps to balance the storage performance and fast-charging performance of the sodium secondary battery, and comprehensively improve the performance of the sodium secondary battery.

In any embodiment, based on the total mass of the electrolyte, a mass percentage of the difluoro(oxalato)borate is 0.01% to 5%, optionally 0.1% to 2%.

Controlling the mass percentage of difluoro(oxalato)borate within a proper range facilitates the formation of components containing borate in the SEI film, so as to effectively improve the overall stability of the interfacial SEI film, reduce the degree of gas evolution, and improve the cycling performance and storage performance of the sodium secondary battery. In addition, it also reduces the influence on storage performance brought by intensified gas evolution; such gas evolution is caused by the oxidative decomposition of excessive difluoro(oxalato)borate on the positive electrode sheet side when the mass percentage of the difluoro(oxalato)borate is excessively high, so as to balance the cycling performance and storage performance of the sodium secondary battery. Further controlling the mass percentage of the difluoro(oxalato)borate to be 0.1% to 2% helps to balance the storage performance and fast-charging performance of the sodium secondary battery, and comprehensively improve the performance of the sodium secondary battery.

In any embodiment, based on the total mass of the electrolyte, a mass percentage of the sultone compound containing a carbon-carbon double bond is 0.01% to 5%, optionally 0.1% to 2%.

Controlling the mass percentage of the sultone compound containing a carbon-carbon double bond within a proper range facilitates the formation of sufficient CEI film, so as to hinder the direct contact between the positive electrode sheet and the electrolyte, reduce the degree of oxidative gas evolution on the positive electrode sheet side and inhibit the generation of RH⁺, and improve the storage performance and cycling performance of the sodium secondary battery. Meanwhile, it can reduce the risk of sodium plating aggravated by the increase of interfacial impedance on the negative electrode sheet side, which is caused by excessive sultone compound containing a carbon-carbon double bond participating in the formation of the integral SEI film on the negative electrode sheet side, so as to comprehensively improve the performance of the sodium secondary battery.

A second aspect of the present application provides a sodium secondary battery, including a positive electrode sheet, a negative electrode sheet and the electrolyte of the first aspect of the present application.

In any embodiment, the positive electrode sheet includes a positive electrode current collector and a positive electrode material layer disposed on at least one side of the positive electrode current collector, where the positive electrode material layer further includes a positive electrode active material, and the positive electrode active material includes a layered transition metal oxide.

In any embodiment, the layered transition metal oxide includes NaₐM_{b}Fe_{c}O₂, where M includes at least one of Sc, Ti, V, Cr, Mn, Co, Ni, Cu, Zn, Zr, Nb, Mo, Sn, Hf, Ta, W, Pb, 0.67<a<1.1, 0.5<b<1, and 0<c<0.5.

The layered transition metal oxide positive electrode active material features a high voltage advantage.

In any embodiment, the positive electrode material layer includes a layered transition metal oxide containing element Cu; where
a ratio of the mass percentage of the sultone compound containing a carbon-carbon double bond in the electrolyte to a mass percentage of element Cu in the positive electrode active material is greater than or equal to 0.002, and the mass percentage of element Cu is based on a total mass of the positive electrode active material.

Introducing element Cu into the positive electrode material layer is conducive to the structural stability of the positive electrode active material. Meanwhile, controlling the ratio of the mass percentage of the cyclic ester compound in the electrolyte to the mass percentage of element Cu in the positive electrode active material within a proper range can effectively reduce the degree of intensified gas evolution caused by the oxidative decomposition of the electrolyte on the positive electrode sheet side.

In any embodiment, based on the total mass of the positive electrode active material, the mass percentage of element Cu in the positive electrode active material is less than or equal to 23%, optionally 5% to 20%.

Controlling the mass percentage of element Cu in the positive electrode active material within a proper range helps to provide sufficient element Cu to enhance the structural stability of the positive electrode active material, and can also reduce the deterioration degree of the sodium secondary battery performance caused by the oxidative decomposition of the added electrolyte due to the excessively high mass percentage of element Cu in the positive electrode material layer. Further controlling the mass percentage of element Cu in the positive electrode active material to be 5% to 20% helps to further balance the storage performance and fast-charging performance of the sodium secondary battery.

In any embodiment, the negative electrode sheet includes a negative electrode current collector and a negative electrode material layer located on at least one side of the negative electrode current collector, and the negative electrode material layer includes element Ca; where
a ratio of the mass percentage of the cyclic ester compound containing a sulfate group and/or a sulfite group in the electrolyte to the mass percentage of element Ca in the negative electrode material layer is greater than or equal to 1, and the mass percentage of element Ca is based on a total mass of the negative electrode material layer.

Introducing element Ca into the negative electrode active material helps to reduce the degree of sodium dendrite formation. Meanwhile, introducing element Ca into the negative electrode active material also facilitates the formation of an SEI film containing an organic calcium salt component with the cyclic ester compound containing a sulfate group and/or a sulfite group, so as to enhance the toughness of the integral SEI film and reduce the direct-current impedance of the sodium secondary battery. Controlling the ratio of the mass percentage of the first additive in the electrolyte to the mass percentage of element Ca in the negative electrode material layer within a proper range can balance the storage performance and fast-charging performance of the sodium secondary battery.

In any embodiment, based on the total mass of the negative electrode material layer, the mass percentage of element Ca in the negative electrode material layer is 1ppm to 3000ppm, optionally 50ppm to 1000ppm or 100ppm to 1000ppm.

Controlling the mass percentage of element Ca in the negative electrode material layer within a proper range can not only form a sufficient amount of SEI film containing an organic calcium salt component, enhance the toughness of the integral SEI film, and reduce the direct-current impedance of the sodium secondary battery, but also reduce multiple adverse effects induced by an excessively high mass percentage of calcium element in the negative electrode material layer. The adverse effects include: the risk of the negative electrode sheet preparation failure caused by the gelation of the slurry during the preparation of the negative electrode sheet, the reduction degree in the initial efficiency (first Coulombic efficiency) and aggravation degree of gas evolution caused by the formation of Ca(OH)₂ in the preparation process, or the deterioration degree of the sodium secondary battery performance caused by the rise in the direct-current impedance of the sodium secondary battery. This design can balance the storage performance and fast-charging performance of the sodium secondary battery. Further controlling the mass percentage of element Ca in the negative electrode material layer to be 50ppm to 1000ppm or 100ppm to 1000ppm helps to further comprehensively improve the storage performance and fast-charging performance of the sodium secondary battery.

In any embodiment, the negative electrode material layer further includes a negative electrode active material, and the negative electrode active material includes one or more of hard carbon, tin alloy, and metal oxide.

A third aspect of the present application provides an electric device, including the sodium secondary battery of the second aspect of the present application.

### BRIEF DESCRIPTION OF THE DRAWINGS

FIG. 1 is a schematic diagram of a sodium secondary battery according to an embodiment of the present application.
FIG. 2 is an exploded view of the sodium secondary battery according to an embodiment of the present application shown in FIG. 1.
FIG. 3 is a schematic diagram of a battery module according to an embodiment of the present application.
FIG. 4 is a schematic diagram of a battery pack according to an embodiment of the present application.
FIG. 5 is an exploded view of the battery pack according to an embodiment of the present application shown in FIG. 4.
FIG. 6 is a schematic diagram of an electric device using the sodium secondary battery according to an embodiment of the present application as a power source.

Description of reference numerals in the accompanying drawings:
1. battery pack; 2. upper box; 3. lower box; 4. battery module; 5. sodium secondary battery; 51. casing; 52 electrode assembly; and 53. cover plate.

### DESCRIPTION OF EMBODIMENTS

Hereinafter, embodiments in which an electrolyte, a sodium secondary battery, and an electric device of the present application are specifically disclosed will be described in detail with appropriate reference to the accompanying drawings. Unnecessary redundant descriptions are omitted in some cases. For example, detailed descriptions of well-known matters and repeated descriptions substantially identical to each other may be omitted. This is to avoid unnecessary verbosity in the following descriptions and facilitate understanding by those skilled in the art. In addition, the accompanying drawings and the following descriptions are provided to enable those skilled in the art to fully understand the present application and shall not be construed as limiting the subject matter described in the claims.

The "ranges" disclosed in the present application are defined in the form of lower and upper limits, and a given range is defined by selecting a lower limit and an upper limit, where the selected lower and upper limits define the boundaries of a particular range. A range defined in this manner may include endpoints or exclude endpoints, and any combination may be made, that is, any lower limit may be combined with any upper limit to form a range. For example, if ranges of 60-120 and 80-110 are listed for a particular parameter, it is also contemplated that ranges of 60-110 and 80-120 are contemplated. In addition, if the minimum range values 1 and 2 are listed, and if the maximum range values 3, 4 and 5 are listed, then the following ranges are all contemplated: 1-3, 1-4, 1-5, 2-3, 2-4 and 2-5. In the present application, unless otherwise specified, the numerical range "a-b" represents an abbreviated representation of any real number combination between a and b, where a and b are both real numbers. For example, the numerical range "0-5" means that all real numbers between "0-5" have been fully recited herein, and "0-5" is merely an abbreviated representation of these numerical combinations. In addition, when a parameter is expressed as an integer ≥2, it is equivalent to disclosing that the parameter is, for example, the integers 2, 3, 4, 5, 6, 7, 8, 9, 10, 11, 12, and so on.

Unless otherwise specified, all embodiments and optional embodiments of the present application can be combined with each other to form a new technical solution.

Unless otherwise specified, all technical features and optional technical features of the present application can be combined with each other to form a new technical solution.

Unless otherwise specified, all steps of the present application may be performed in sequence or in a random order, and are preferably performed in sequence. For example, the method includes steps (a) and (b), indicating that the method may include steps (a) and (b) performed sequentially, or may include steps (b) and (a) performed sequentially. For example, if it is mentioned that the method may further include step (c), this indicates that step (c) may be added to the method in any order, for example, the method may include steps (a), (b) and (c), or may include steps (a), (c) and (b), or may include steps (c), (a) and (b), and so on.

Unless otherwise specified, the "including" and "containing" mentioned in the present application encompass an open-ended definition and may also adopt a closed-ended definition. For example, "including" and "containing" may indicate that other components not listed may also be included or contained, or only the listed components may be included or contained.

Unless otherwise specified, in the present application, the term "or" is inclusive. For example, the phrase "A or B" means "A, B, or both A and B". More specifically, the following conditions satisfy the condition "A or B": A is true (or present) and B is false (or absent); A is false (or absent) and B is true (or present); or both A and B are true (or present).

Gas evolution in sodium secondary batteries seriously affects their electrical performance, especially gas evolution on the negative electrode sheet side in sodium secondary batteries at low voltage. In general, film-forming additives are added into the electrolyte to form an SEI (Solid Electrolyte Interphase, solid electrolyte interphase) film on a surface of the negative electrode sheet. The formed SEI film can inhibit further decomposition and gas evolution of the electrolyte to a certain extent, so as to improve the performance of the sodium secondary battery. Nevertheless, gas evolution still occurs during long-term cycling and storage of sodium secondary batteries. Therefore, it is urgent to develop a novel electrolyte to meet the application requirements of new-generation electrochemical systems.

### [Electrolyte]

Based on this, the present application provides an electrolyte for a sodium secondary battery, including a first additive, a second additive, and a third additive, where the first additive includes a cyclic ester compound containing a sulfate group and/or a sulfite group, the second additive includes difluoro(oxalato)borate, and the third additive includes a sultone compound containing a carbon-carbon double bond.

As used herein, "difluoro(oxalato)borate" refers to a compound having an anion of 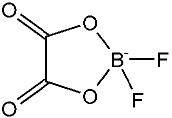 and a cation including, but not limited to, one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, and Ni³⁺.

In some embodiments, the cyclic ester compound containing a sulfate group and/or a sulfite group includes at least one of a compound with a structure represented by Formula I-1 and a compound with a structure represented by Formula I-2: 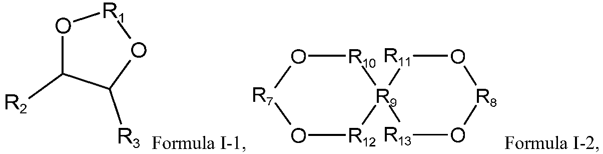 where
in Formula I-1, R₁ includes 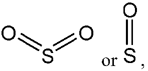 R₂ and R₃ are each independently selected from at least one of 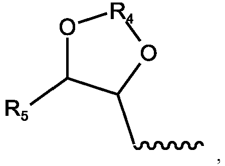 a hydrogen atom, C1-C6 alkyl, a halogen atom, C1-C3 haloalkyl, C1-C3 alkoxy, C1-C3 haloalkoxy, C1-C3 alkenyl, ester group, cyano group, and sulfonic acid group, at least one of R₂ and R₃ includes 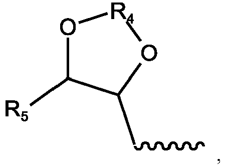 R₄ includes at least one of 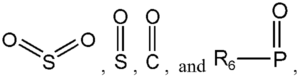 and R₅ and R₆ are each independently selected from at least one of 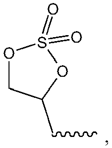 a hydrogen atom, C1-C6 alkyl, a halogen atom, C1-C3 haloalkyl, C1-C3 alkoxy, C1-C3 haloalkoxy, C1-C3 alkenyl, ester group, cyano group, and sulfonic acid group; and
in Formula I-2, R₇ includes 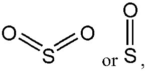 R₈ includes at least one of 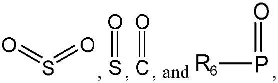 R9 includes at least one of C, C-R₁₄-C, and 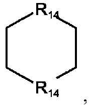 R₁₄ includes at least one of a single bond, C1-C6 alkyl, C1-C6 ether group, and C1-C3 alkoxy, and R₁₀, R₁₁, R₁₂, and R₁₃ are each independently selected from at least one of a single bond and C1-C3 alkylene.

It has been found that there are two reasons for severe gas evolution in sodium secondary batteries during cycling and storage at low voltage. On one hand, the negative electrode potential of the sodium secondary battery is 0.3 V higher than that of the lithium secondary battery. A higher potential tends to drive the film-forming additive to form an unstable SEI film mainly composed of certain components. Such unstable SEI film can undergo oxidative decomposition at 0.5 V, and generate a large amount of gas. On the other hand, the solubility of the SEI film in the electrolyte in the sodium secondary battery is higher than that of the SEI film in the electrolyte in the lithium secondary battery, and the dissolution of the SEI film will cause the negative electrode sheet to be exposed to the electrolyte, causing side reactions between the negative electrode sheet and the electrolyte to generate a large amount of gas. In addition, the generation of RH⁺ on the positive electrode sheet side also causes gas evolution problems. For example, transition metals in the layered transition metal oxide positive electrode active material can catalyze the oxidation of the solvent in the electrolyte to generate RH⁺, or at high voltage, anions in the positive electrode sheet oxidize the solvent in the electrolyte to generate RH⁺. The generated RH⁺ migrates from the positive electrode sheet side to the negative electrode sheet side and undergoes deposition. Similar to Li⁺, RH⁺ can pass through the SEI film to react with the negative electrode sheet to form oxidation-prone products, which aggravates gas evolution on the negative electrode sheet side.

It can be understood that the first additive including the cyclic ester compound containing a sulfate group and/or a sulfite group and/or the second additive including difluoro(oxalato)borate can be reduced at a negative electrode prior to the solvent to form an SEI film, and generate components containing a sulfate group and/or a sulfite group and other components containing a borate in the SEI film. The synergistic action of the two additives can not only improve the stability of the interfacial SEI film, reduce the degree of oxidative gas evolution of the SEI film during a discharge process, but also lower the dissolution degree of the interfacial SEI film in the electrolyte to a certain extent, and reduce the degree of gas evolution induced by a reaction between the solvent in the electrolyte and the negative electrode sheet due to the exposure of the negative electrode sheet resulting from the dissolution of the SEI film. Meanwhile, the third additive including the sultone compound containing a carbon-carbon double bond is further introduced into the electrolyte. The sultone compound containing a carbon-carbon double bond can preferentially undergo an oxidative polymerization reaction on the surface of the positive electrode sheet to form a CEI film including a sulfur-containing polymer that covers the surface of the positive electrode sheet, thereby hindering the direct contact between the positive electrode sheet and the electrolyte. On the one hand, it reduces the degree of gas evolution caused by side reactions between the solvent in the electrolyte and the positive electrode sheet; on the other hand, it can also reduce the degree of side reactions with the negative electrode sheet, which are caused by RH⁺ generated by the catalytic oxidation of transition metals in the layered transition metal oxide migrating to the negative electrode sheet side and depositing on the negative electrode sheet side, further reduce gas evolution on the negative electrode sheet side, and comprehensively improve the storage performance, fast-charging performance and cycling performance of the sodium secondary battery.

In some embodiments, the difluoro(oxalato)borate includes a compound represented by Formula II:

(F₂C₂O₄B)_{y}M^{y+} Formula II,

where
in Formula II, M^{y+} includes one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, Ni³⁺, and y=1, 2, or 3.

In some embodiments, the difluoro(oxalato)borate includes sodium difluoro(oxalato)borate. In some embodiments, the difluoro(oxalato)borate includes lithium difluoro(oxalato)borate. In some embodiments, the difluoro(oxalato)borate includes magnesium difluoro(oxalato)borate. In some embodiments, the difluoro(oxalato)borate includes aluminum difluoro(oxalato)borate. In some embodiments, the difluoro(oxalato)borate includes sodium difluoro(oxalato)borate and lithium difluoro(oxalato)borate.

The above difluoro(oxalato)borates can all generate other components containing borate in the SEI film, which can improve the overall stability of the SEI film on the surface of the negative electrode sheet, reduce the degree of oxidative decomposition of the integral SEI film, and lower the solubility of the integral SEI film in the electrolyte solvent to a certain extent, thereby improving the storage performance of the sodium secondary battery.

In some embodiments, the sultone compound containing a carbon-carbon double bond includes a compound with a structure represented by Formula III: 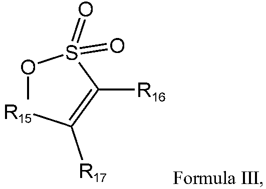 where
in Formula III, R₁₅ includes at least one of alkylene, alkoxy, carbonyl, and haloalkylene, and R₁₆ and R₁₇ are each independently selected from at least one of a hydrogen atom, C1-C6 alkyl, a halogen atom, C1-C3 haloalkyl, C1-C3 alkoxy, C1-C3 haloalkoxy, phenyl, amino, amine group, silyl group, C1-C3 alkenyl, ester group, cyano group, and sulfonic acid group.

The above sultone compounds containing a carbon-carbon double bond can all form a CEI film containing a sulfur-containing polymer on the positive electrode sheet side that covers the surface of the positive electrode sheet, thereby hindering the direct contact between the positive electrode sheet and the electrolyte. On the one hand, it reduces the degree of gas evolution caused by side reactions between the solvent in the electrolyte and the positive electrode sheet; on the other hand, it can also reduce the degree of side reactions with the negative electrode sheet, which are caused by RH⁺ generated by the catalytic oxidation of transition metals in the layered transition metal oxide migrating to the negative electrode sheet side and depositing on the negative electrode sheet side. Meanwhile, it reduces gas evolution on the positive electrode sheet side and the negative electrode sheet side, and comprehensively improves the storage performance and cycling performance of the sodium secondary battery.

In some embodiments, in Formula I-1, R₁ includes 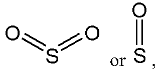 R₂ and R₃ are each independently selected from at least one of 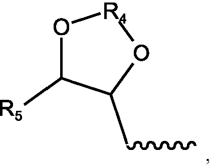 a hydrogen atom, C1-C6 alkyl, and a halogen atom, at least one of R₂ and R₃ includes 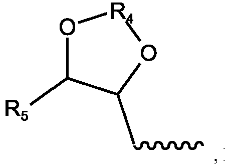 R₄ includes at least one of 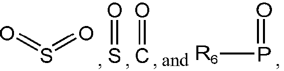 and R₅ and R₆ are each independently selected from at least one of a hydrogen atom, C1-C6 alkyl, and a halogen atom; and/or
in Formula I-2, R₇ includes 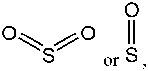 R₈ includes at least one of 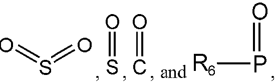 R9 includes at least one of C and C-R₁₄-C, R₁₄ includes at least one of a single bond, C1-C6 alkyl, and C1-C6 ether group, and R₁₀, R₁₁, R₁₂, and R₁₃ are each independently selected from at least one of a single bond and C1-C3 alkylene.

In some embodiments, the cyclic ester compound containing a sulfate group and/or a sulfite group includes at least one of

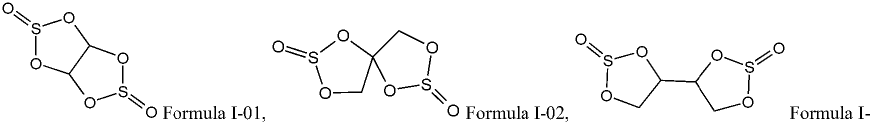

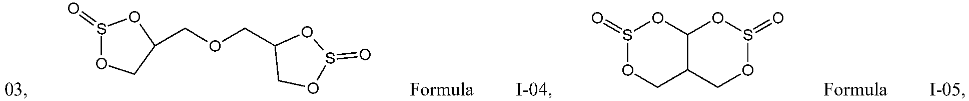

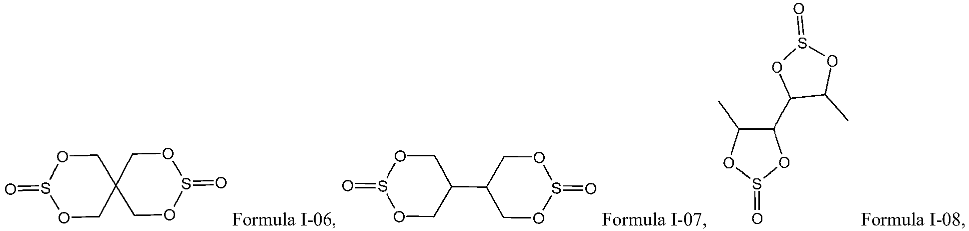

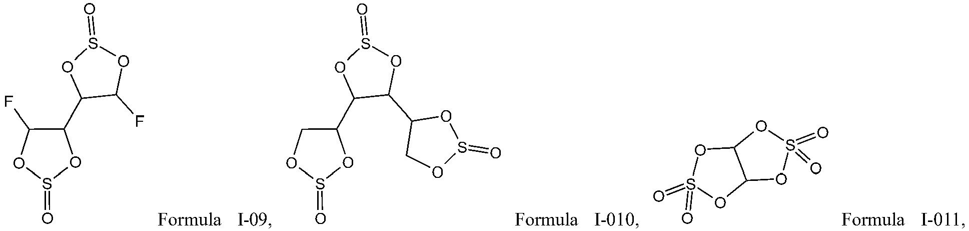

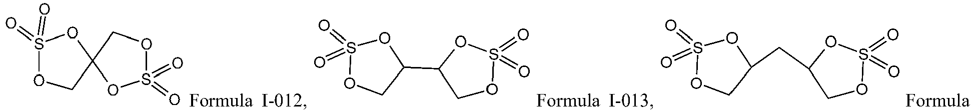

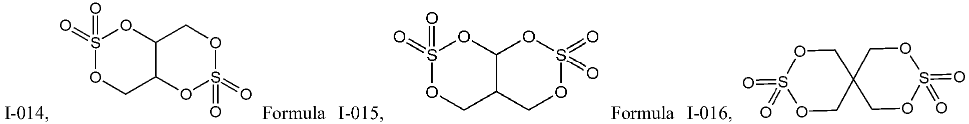

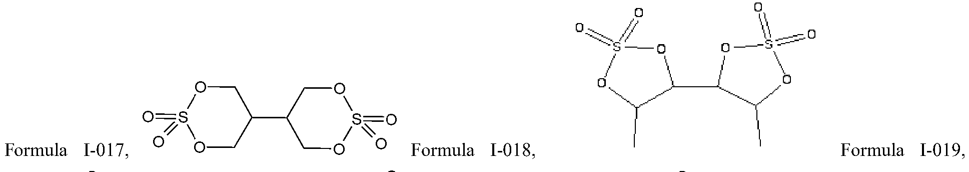

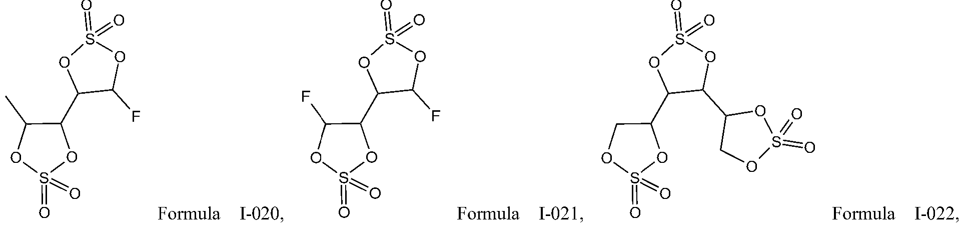

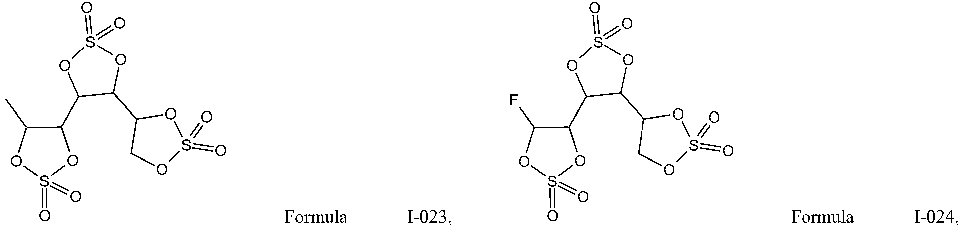

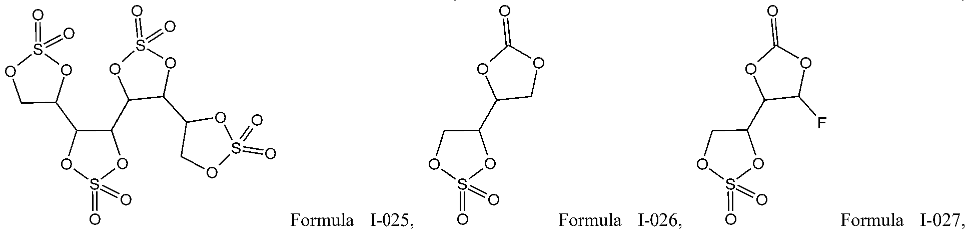

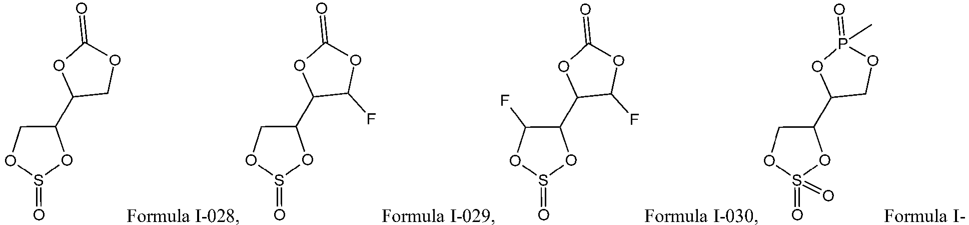

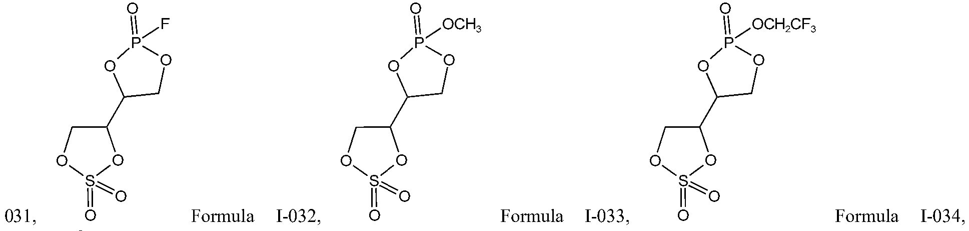

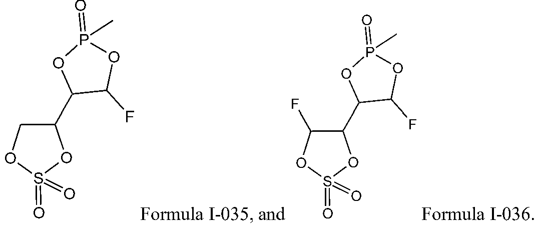

In this context, in 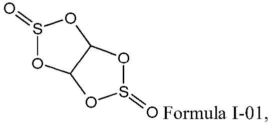 R₁₀, R₁₁, R₁₂, and R₁₃ are single bonds, and R₉ is C-C; in 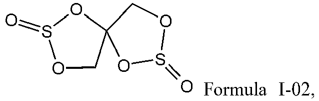 R₁₀ and R₁₁ are methylene, R₁₂ and R₁₃ are single bonds, and R₉ is C; in 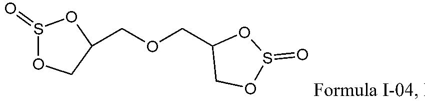 R₁₀ and R₁₁ are single bonds, R₁₂ and R₁₃ are methylene, and R₉ is C-CO-C-C; and in 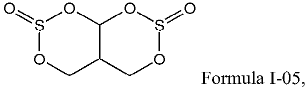 R₁₀ and R₁₁ are single bonds, R₁₂ and R₁₃ are methylene, and R₉ is C-C.

The above substances serving as the first additive can all be dissolved in the electrolyte, and form a dense SEI film during the charging process to cover the surface of the negative electrode sheet, so as to reduce the degree of exposure of the negative electrode sheet to the electrolyte, reduce side reactions and gas evolution, and improve the performance of the sodium secondary battery. In addition, compared with the compound having the structure shown in 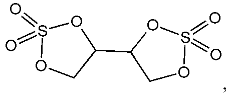 other compounds possess a more stable structure, so that the sodium secondary battery has better cycling performance.

In some embodiments, in Formula II, M^{y+} includes at least one of Li⁺ and Na+. In some embodiments, in Formula II, M^{y+} includes Li+. In some embodiments, in Formula II, M^{y+} includes Na+.

Li+ or Na+ has a smaller ionic radius, which enables sodium difluoro(oxalato)borate or lithium difluoro(oxalato)borate to have higher solubility, thereby reducing the influence brought by the addition of the second additive on the conductivity of the electrolyte.

In some embodiments, in Formula III, R₁₅ includes at least one of alkylene, carbonyl, and haloalkylene, and R₁₆ and R₁₇ are each independently selected from at least one of a hydrogen atom, C1-C6 alkyl, a halogen atom, C1-C3 alkoxy, phenyl, amino, and silyl group.

In some embodiments, the structure represented by Formula III includes at least one of

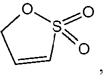

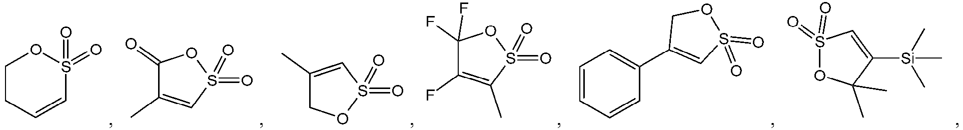

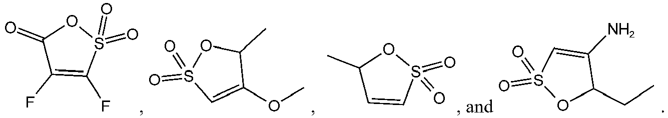

The above sultone compounds containing a carbon-carbon double bond can all be dissolved in the electrolyte, which reduces the influence brought by the addition of the sultone compound containing a carbon-carbon double bond as an additive on the ionic conductivity of the electrolyte.

In some embodiments, a mass ratio of the cyclic ester compound containing a sulfate group and/or a sulfite group to the difluoro(oxalato)borate is 0.2 to 500, optionally 1 to 100. In some embodiments, the mass ratio of the cyclic ester compound containing a sulfate group and/or a sulfite group to the difluoro(oxalato)borate may optionally be 0.2, 0.5, 1, 5, 10, 20, 30, 40, 50, 60, 70, 80, 90, 100, 200, 300, 400, 500, or a value in a range defined by any two of these values.

Controlling the mass ratio of the cyclic ester compound containing a sulfate group and/or a sulfite group to difluoro(oxalato)borate within a proper range can not only relieve the aggravation of gas evolution caused by intensified oxidative decomposition of the integral SEI film, during cycling but also avoid the fracture of the SEI film in the cycling process resulted from insufficient toughness of the integral SEI film which would otherwise seriously deteriorate cycling performance. A proper ratio range can balance the storage performance and cycling performance of the sodium secondary battery, so as to comprehensively optimize the performance of the sodium secondary battery. Further controlling the mass ratio of the cyclic ester compound containing a sulfate group and/or a sulfite group to the difluoro(oxalato)borate to be 0.2 to 100 or 1 to 100 helps to further balance the storage performance and cycling performance of the sodium secondary battery.

In some embodiments, based on a total mass of the electrolyte, a sum of mass percentages of the cyclic ester compound containing a sulfate group and/or a sulfite group and the sultone compound containing a carbon-carbon double bond is 0.1% to 6%, optionally 0.5% to 5%. In some embodiments, based on the total mass of the electrolyte, the sum of the mass percentages of the cyclic ester compound containing a sulfate group and/or a sulfite group and the sultone compound containing a carbon-carbon double bond may optionally be 0.1%, 0.2%, 0.5%, 0.7%, 1%, 1.5%, 2%, 3%, 4%, 5%, 6%, or a value in a range defined by any two of these values.

It can be understood that both the cyclic ester compound containing a sulfate group and/or a sulfite group and the sultone compound containing a carbon-carbon double bond can form a CEI film or SEI film on the positive electrode sheet side and the negative electrode sheet side, and the formation of such CEI film or SEI film leads to an increase in the direct-current impedance of the sodium secondary battery. Controlling the sum of the mass percentages of the cyclic ester compound containing a sulfate group and/or a sulfite group and the sultone compound containing a carbon-carbon double bond within a proper range can not only effectively alleviate the gas evolution of the sodium secondary battery, but also mitigate the adverse effect on fast-charging performance caused by the rise of direct-current impedance induced by film formation.

In some embodiments, a mass ratio of the difluoro(oxalato)borate to the sultone compound containing a carbon-carbon double bond is 0.2 to 100, optionally 1 to 50. In some embodiments, the mass ratio of the difluoro(oxalato)borate to the sultone compound containing a carbon-carbon double bond may optionally be 0.2, 0.5, 1, 5, 10, 20, 30, 40, 50, 60, 70, 80, 90, 100, or a value in a range defined by any two of these values.

It can be understood that the difluoro(oxalato)borate not only participates in the formation of the SEI film at the negative electrode sheet, but also undergoes an oxidative reaction at the positive electrode sheet side to generate gas. Meanwhile, the sultone compound containing a carbon-carbon double bond can form films on both the positive electrode sheet side and the negative electrode sheet side, and film formation on the negative electrode sheet side will increase the interface impedance of the negative electrode sheet and aggravate the sodium plating risk. Controlling the mass ratio of the difluoro(oxalato)borate to the sultone compound containing a carbon-carbon double bond within a proper range can comprehensively improve the performance of the sodium secondary battery. If the mass ratio of the difluoro(oxalato)borate to the sultone compound containing a carbon-carbon double bond is lower than 0.2, the sultone compound containing a carbon-carbon double bond will be excessive, and a large amount of the sultone compound containing a carbon-carbon double bond forms a film on the negative electrode sheet side, which degrades the interface impedance of the negative electrode sheet, impairs sodium migration, and further aggravates the sodium plating risk. If the mass ratio of the difluoro(oxalato)borate to the sultone compound containing a carbon-carbon double bond is higher than 100, excessive difluoro(oxalato)borate compound will undergo oxidative decomposition on the positive electrode sheet side to generate gas, thereby deteriorating the performance of the sodium secondary battery.

In some embodiments, based on the total mass of the electrolyte, a product of mass percentages of the cyclic ester compound containing a sulfate group and/or a sulfite group, the difluoro(oxalato)borate, and the sultone compound containing a carbon-carbon double bond is 0.005×10⁻⁶ to 10×10⁻⁶, optionally 0.01×10⁻⁶ to 5×10⁻⁶. In some embodiments, based on the total mass of the electrolyte, the product of the mass percentages of the cyclic ester compound containing a sulfate group and/or a sulfite group, the difluoro(oxalato)borate, and the sultone compound containing a carbon-carbon double bond may optionally be 0.005×10⁻⁶, 0.01×10⁻⁶, 0.05×10⁻⁶, 0.1×10⁻⁶, 0.2×10⁻⁶, 0.4×10⁻⁶, 0.5×10⁻⁶, 0.6×10⁻⁶, 0.8×10⁻⁶, 1×10⁻⁶, 2×10⁻⁶, 4×10⁻⁶, 5×10⁻⁶, 6×10⁻⁶, 8×10⁻⁶, 10×10⁻⁶, or a value in a range defined by any two of these values.

Controlling the product of the mass percentages of the cyclic ester compound containing a sulfate group and/or a sulfite group, difluoro(oxalato)borate, and the sultone compound containing a carbon-carbon double bond within a proper range can not only reduce the influence caused by an excessively low mass percentage of any one of the three additives on the degree of gas evolution, but also reduce the influence caused by an excessively high mass percentage of any one of the three additives on the direct-current impedance and fast-charging performance of the sodium secondary battery, so as to comprehensively improve the performance of the sodium secondary battery.

In some embodiments, based on the total mass of the electrolyte, a mass percentage of the cyclic ester compound containing a sulfate group and/or a sulfite group is 0.01% to 5%, optionally 0.1% to 3%. In some embodiments, based on the total mass of the electrolyte, the mass percentage of the cyclic ester compound containing a sulfate group and/or a sulfite group may optionally be 0.01%, 0.05%, 0.1%, 0.2%, 0.5%, 0.7%, 1%, 1.5%, 2%, 3%, 4%, 5%, or a value in a range defined by any two of these values.

Controlling the mass percentage of the cyclic ester compound containing a sulfate group and/or a sulfite group within a proper range helps to form components containing a sulfate group and/or a sulfite group in the SEI film, reduce the fracture degree of the integral SEI film induced by the swelling of the sodium secondary battery during cycling, so as to enhance the protection capability of the integral SEI film and improve the storage performance of the sodium secondary battery. In addition, it can also reduce the degree of aggravated gas evolution induced by the oxidative decomposition of excessive cyclic ester compound on the positive electrode sheet side when the mass percentage of the cyclic ester compound is excessively high, as well as reduce the degree of performance deterioration of the sodium secondary battery, which is aggravated by the increase of interfacial resistance of the positive electrode sheet owing to the accumulation of oxidative decomposition products on the surface of the positive electrode sheet. Further controlling the mass percentage of the cyclic ester compound to be 0.1% to 2% helps to balance the storage performance and fast-charging performance of the sodium secondary battery, and comprehensively improve the performance of the sodium secondary battery.

In some embodiments, based on the total mass of the electrolyte, a mass percentage of the difluoro(oxalato)borate is 0.01% to 5%, optionally 0.1% to 2%. In some embodiments, based on the total mass of the electrolyte, the mass percentage of the difluoro(oxalato)borate may optionally be 0.01%, 0.05%, 0.1%, 0.2%, 0.5%, 0.7%, 1%, 1.5%, 2%, 3%, 4%, 5%, or a value in a range defined by any two of these values.

Controlling the mass percentage of difluoro(oxalato)borate within a proper range facilitates the formation of components containing borate in the SEI film, so as to effectively improve the overall stability of the interfacial SEI film, reduce the degree of gas evolution, and improve the cycling performance and storage performance of the sodium secondary battery. In addition, it also reduces the influence on storage performance brought by intensified gas evolution; such gas evolution is caused by the oxidative decomposition of excessive difluoro(oxalato)borate on the positive electrode sheet side when the mass percentage of the difluoro(oxalato)borate is excessively high, so as to balance the cycling performance and storage performance of the sodium secondary battery. Further controlling the mass percentage of the difluoro(oxalato)borate to be 0.1% to 2% helps to balance the storage performance and fast-charging performance of the sodium secondary battery, and comprehensively improve the performance of the sodium secondary battery.

In some embodiments, based on the total mass of the electrolyte, a mass percentage of the sultone compound containing a carbon-carbon double bond is 0.01% to 5%, optionally 0.1% to 2%. In some embodiments, based on the total mass of the electrolyte, the mass percentage of the sultone compound containing a carbon-carbon double bond may optionally be 0.01%, 0.05%, 0.1%, 0.2%, 0.5%, 0.7%, 1%, 1.5%, 2%, 3%, 4%, 5%, or a value in a range defined by any two of these values.

Controlling the mass percentage of the sultone compound containing a carbon-carbon double bond within a proper range facilitates the formation of sufficient CEI film, so as to hinder the direct contact between the positive electrode sheet and the electrolyte, reduce the degree of oxidative gas evolution on the positive electrode sheet side and inhibit the generation of RH⁺, and improve the storage performance and cycling performance of the sodium secondary battery. Meanwhile, it can reduce the risk of sodium plating aggravated by the increase of interfacial impedance on the negative electrode sheet side, which is caused by excessive sultone compound containing a carbon-carbon double bond participating in the formation of the integral SEI film on the negative electrode sheet side, so as to comprehensively improve the performance of the sodium secondary battery.

In some embodiments, the electrolyte includes a sodium salt, and the sodium salt includes one or more of NaPF₆, NaFSI, NaBF₄, NaN(SO₂F)₂, NaClO₄, NaAsF₆, NaB(C₂O₄)₂, and NaBF₂(C₂O₄).

In some embodiments, the sodium salt includes NaPF₆. In some embodiments, the sodium salt includes NaBF₄. In some embodiments, the sodium salt includes NaFSI. In some embodiments, the sodium salt includes NaPF₆ and NaFSI. In some embodiments, the sodium salt includes NaPF₆ and NaClO₄.

In some embodiments, the electrolyte includes a solvent, and the solvent includes one or more of chain carbonate solvents, chain carboxylate solvents, cyclic carbonate solvents, and ether solvents.

In some embodiments, the chain carbonate solvent includes one or more of dimethyl carbonate, diethyl carbonate, methyl ethyl carbonate, methyl propyl carbonate, methyl isopropyl carbonate, methyl butyl carbonate, ethyl propyl carbonate, dipropyl carbonate, and dibutyl carbonate;
the chain carboxylate solvent includes one or more of methyl formate, ethyl formate, methyl propionate, ethyl propionate, propyl propionate, ethyl butyrate, methyl acetate, ethyl acetate, and propyl acetate;
the cyclic carbonate includes one or more of ethylene carbonate, propylene carbonate, butylene carbonate, vinylene carbonate, fluoroethylene carbonate, ethylene sulfite, propylene sulfite, vinyl ethylene carbonate, 4-ethynyl-1,3-dioxolan-2-one, cis-4,5-difluoro-1,3-dioxolan-2-one, trans-4,5-difluoro-1,3-dioxolan-2-one; and
the ether solvent includes one or more of 1,3-dioxolane, tetrahydrofuran, 2-methyltetrahydrofuran, tetrahydropyran, 1,2-dimethoxyethane, diethylene glycol dimethyl ether, 1,2-diethoxyethane, and 1,2-dibutoxyethane.

### [Positive electrode sheet]

The positive electrode sheet includes a positive electrode current collector and a positive electrode material layer disposed on at least one side of the positive electrode current collector.

As an example, the positive electrode current collector has two opposite surfaces in its own thickness direction, and the positive electrode material layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode material layer includes a positive electrode active material, and the positive electrode active material may be a well-known positive electrode active material used for batteries in the art. As an example, the positive electrode active material may include at least one of the following materials: layered transition metal oxides, a polyanionic compound, or a Prussian blue compound. However, the present application is not limited to such materials, and may alternatively use other conventional well-known materials that can be used as positive electrode active materials for batteries. One of these positive electrode active materials may be used alone, or two or more of them may be used in combination. The Prussian blue compound includes NaₓP[R(CN)₆]_{δ}·zH2O, where the P and R are each independently selected from at least one of transition metal elements, 0<x≤2, 0<δ≤1, and 0≤z≤10. The polyanionic compound includes Na_{b}Me_{c}(PO₄)_{d}O₂X, where Me includes one or more of Ti, Cr, Mn, Fe, Co, Ni, V, Cu, and Zn, X includes one or more of F, Cl, and Br, 0<b≤4, 0<c≤2, and 1≤d≤3. The layered transition metal oxide includes NaₐM_{b}Fe_{c}O₂, where M includes transition metal ions, 0.67<a<1.1, 0.5<b<1, and 0<c<0.5.

In some embodiments, the positive electrode active material includes a layered transition metal oxide.

In some embodiments, the layered transition metal oxide includes NaₐM_{b}Fe_{c}O₂, where M includes at least one of Sc, Ti, V, Cr, Mn, Co, Ni, Cu, Zn, Zr, Nb, Mo, Sn, Hf, Ta, W, Pb, 0.67<a<1.1, 0.5<b<1, and 0<c<0.5.

The layered transition metal oxide positive electrode active material features a high voltage advantage. However, transition metals contained therein can catalyze the oxidation of the solvent in the electrolyte to generate RH⁺. RH⁺ migrates from the positive electrode sheet side to the negative electrode sheet side and undergoes deposition. Similar to Li⁺, RH⁺ can pass through the SEI film to react with the negative electrode sheet to form oxidation-prone products, which aggravates gas evolution on the negative electrode sheet side. The third additive including the sultone compound containing a carbon-carbon double bond preferentially undergoes an oxidative polymerization reaction on the surface of the positive electrode sheet to form a CEI film including a sulfur-containing polymer that covers the surface of the positive electrode sheet, and thus hinders the direct contact between the positive electrode sheet and the electrolyte. On the one hand, it reduces the degree of gas evolution caused by side reactions between the solvent in the electrolyte and the positive electrode sheet; on the other hand, it can also reduce the degree of side reactions with the negative electrode sheet, which are caused by RH⁺ generated by the catalytic oxidation of transition metals in the layered transition metal oxide migrating to the negative electrode sheet side and depositing on the negative electrode sheet side, further reduce gas evolution on the negative electrode sheet side, and comprehensively improve the storage performance, fast-charging performance and cycling performance of the sodium secondary battery.

In some embodiments, the positive electrode active material includes at least one of Na[Cu_{1/9}Ni_{2/9}Fe_{1/3}Mn_{1/3}]O₂, Na_{7/9}[Cu_{2/9}Fe_{1/9}Mn_{2/3}]O₂, and NaNi_{0.7}Co_{0.15}Mn_{0.15}O₂.

In some embodiments, the positive electrode material layer includes a layered transition metal oxide containing element Cu; where a ratio of the mass percentage of the sultone compound containing a carbon-carbon double bond in the electrolyte to the mass percentage of element Cu in the positive electrode active material is greater than or equal to 0.002, and the mass percentage of element Cu is based on a total mass of the positive electrode active material. In some embodiments, the ratio of the mass percentage of the sultone compound containing a carbon-carbon double bond in the electrolyte to the mass percentage of element Cu in the positive electrode active material may optionally be 0.002, 0.004, 0.005, 0.01, 0.05, 0.1, 0.5, 1, 2, 3, 4, 5, 10, 50, 100, 500, 1000, 2000, 5000, or a value in a range defined by any two of these values, and the mass percentage of element Cu is based on the total mass of the positive electrode active material.

It can be understood that introducing element Cu into the positive electrode active material facilitates the structural stability of the positive electrode active material and improves the cycling performance of the sodium secondary battery. However, element Cu in the positive electrode material layer will undergo valence state changes at high voltage, generating Cu³⁺. Cu³⁺ has high oxidative activity and can accelerate the decomposition of the electrolyte, thereby deteriorating the performance of the sodium secondary battery. In contrast, the sultone compound containing a carbon-carbon double bond in the electrolyte can preferentially undergo an oxidative polymerization reaction on the surface of the positive electrode sheet to form a CEI film including a sulfur-containing polymer that covers the surface of the positive electrode sheet, thereby hindering the direct contact between the positive electrode sheet and the electrolyte. On the one hand, it reduces the degree of gas evolution caused by side reactions between the solvent in the electrolyte and the positive electrode sheet; on the other hand, it can also reduce the degree of side reactions with the negative electrode sheet, which are caused by RH⁺ generated by the catalytic oxidation of transition metals in the layered transition metal oxide migrating to the negative electrode sheet side and depositing on the negative electrode sheet side, and further reduce gas evolution on the negative electrode sheet side. Controlling the ratio of the mass percentage of the sultone compound containing a carbon-carbon double bond in the electrolyte to the mass percentage of element Cu in the positive electrode active material within a proper range can effectively reduce the degree of gas evolution on the positive electrode sheet side and the negative electrode sheet side.

In some embodiments, based on the total mass of the positive electrode active material, the mass percentage of element Cu in the positive electrode active material is less than or equal to 23%. In some embodiments, based on the total mass of the positive electrode active material, the mass percentage of element Cu in the positive electrode active material may optionally be 0.01%, 0.1%, 0.5%, 1%, 2%, 5%, 7%, 10%, 12%, 15%, 18%, 20%, 23%, or a value in a range defined by any two of these values.

Controlling the mass percentage of element Cu in the positive electrode active material within a proper range helps to provide sufficient element Cu to enhance the structural stability of the positive electrode active material, and can also reduce the deterioration degree of the sodium secondary battery performance caused by the oxidative decomposition of the added electrolyte due to the excessively high mass percentage of element Cu in the positive electrode material layer.

In some embodiments, based on the total mass of the positive electrode active material, the mass percentage of element Cu in the positive electrode active material is 5% to 20%.

Further controlling the mass percentage of element Cu in the positive electrode active material layer to be 5% to 20% helps to further balance the storage performance and fast-charging performance of the sodium secondary battery.

In some embodiments, the positive electrode active material may not contain element Cu.

In some embodiments, the positive electrode material layer may further optionally include a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode material layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode sheet may be prepared in the following manner: the foregoing constituents used for preparing the positive electrode sheet, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode sheet.

### [Negative electrode sheet]

The negative electrode sheet includes a negative electrode current collector and a negative electrode material layer disposed on at least one side of the negative electrode current collector.

As an example, the negative electrode current collector has two opposite surfaces in a thickness direction thereof, and the negative electrode material layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

The negative electrode material layer further includes a negative electrode active material, and the negative electrode active material includes one or more of hard carbon, metallic sodium, sodium-tin alloy, and metal oxide.

The above negative electrode active materials all have excellent sodium storage capacity, enabling the sodium secondary battery to have high energy density.

In some embodiments, the negative electrode material layer further includes element Ca; where a ratio of the mass percentage of the cyclic ester compound containing a sulfate group and/or a sulfite group in the electrolyte to the mass percentage of element Ca in the negative electrode material layer is greater than or equal to 1, and the mass percentage of element Ca is based on the total mass of a negative electrode material layer. In some embodiments, the ratio of the mass percentage of the cyclic ester compound containing a sulfate group and/or a sulfite group in the electrolyte to the mass percentage of element Ca in the negative electrode material layer may optionally be 1, 2, 3, 4, 5, 6, 7, 8, 9, 10, 100, 200, 300, 400, 500, 600, 700, 800, 900, 1000, or a value in a range defined by any two of these values, and the mass percentage of element Ca is based on the total mass of the negative electrode material layer.

Introducing element Ca into the negative electrode active material helps to reduce the degree of sodium dendrite formation. Meanwhile, introducing element Ca into the negative electrode active material also facilitates the formation of an SEI film containing an organic calcium salt component with the cyclic ester compound containing a sulfate group and/or a sulfite group, so as to enhance the toughness of the integral SEI film and reduce the direct-current impedance of the sodium secondary battery. Controlling the ratio of the mass percentage of the first additive in the electrolyte to the mass percentage of element Ca in the negative electrode material layer within a proper range can balance the storage performance and fast-charging performance of the sodium secondary battery.

In some embodiments, based on the total mass of the negative electrode material layer, the mass percentage of element Ca in the negative electrode material layer is 1ppm to 3000ppm. In some embodiments, based on the total mass of the negative electrode material layer, the mass percentage of element Ca in the negative electrode material layer may optionally be 1ppm, 5ppm, 10ppm, 50ppm, 100ppm, 200ppm, 400ppm, 500ppm, 600ppm, 800ppm, 1000ppm, 1500ppm, 2000ppm, 2500ppm, 3000ppm, or a value in a range defined by any two of these values.

It can be understood that element Ca in the negative electrode material layer can participate in the formation of the SEI film and be partially consumed, leading to a decrease in the mass percentage of element Ca in the negative electrode material layer. For example, the mass percentage of element Ca in the negative electrode material layer can drop to 1ppm. Therefore, based on the total mass of the negative electrode material layer, the mass percentage of element Ca ranging from 1ppm to 3000ppm is within the scope protected by the embodiments of the present application.

Controlling the mass percentage of element Ca in the negative electrode material layer within a proper range can not only form a sufficient amount of SEI film containing an organic calcium salt component, enhance the toughness of the integral SEI film, and reduce the direct-current impedance of the sodium secondary battery, but also reduce multiple adverse effects induced by an excessively high mass percentage of calcium element in the negative electrode material layer. The adverse effects include: the risk of the negative electrode sheet preparation failure caused by the gelation of the slurry during the preparation of the negative electrode sheet, the reduction degree in the initial efficiency and aggravation degree of gas evolution caused by the formation of Ca(OH)₂ in the preparation process, or the deterioration degree of the sodium secondary battery performance caused by the rise in the direct-current impedance of the sodium secondary battery. This design can balance the storage performance and fast-charging performance of the sodium secondary battery.

In some embodiments, based on the total mass of the negative electrode material layer, the mass percentage of element Ca in the negative electrode material layer is 50ppm to 1000ppm.

In some embodiments, based on the total mass of the negative electrode material layer, the mass percentage of element Ca in the negative electrode material layer is 100ppm to 1000ppm.

Further controlling the mass percentage of element Ca in the negative electrode material layer to be 10ppm to 1000ppm or 100ppm to 1000ppm helps to further comprehensively improve the storage performance and fast-charging performance of the sodium secondary battery.

In some embodiments, the negative electrode film layer further optionally includes a binder. The binder may include at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may include at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode sheet may be prepared in the following manner: the foregoing constituents used for preparing the negative electrode sheet, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode sheet.

### [Separator]

In some embodiments, the sodium secondary battery further includes a separator. The separator may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film. When the separator is a multilayer composite thin film, all layers may be made of the same or different materials.

### [Sodium secondary battery]

In some embodiments, the positive electrode sheet, the negative electrode sheet, and the separator may be made into an electrode assembly through winding or lamination.

In some embodiments, the sodium secondary battery may include an outer package. The outer package may be used for packaging the electrode assembly and the electrolyte.

In some embodiments, the outer package of the sodium secondary battery may be a hard shell, for example, a hard plastic shell, an aluminum shell, or a steel shell. The outer package of the sodium secondary battery may alternatively be a soft pack, for example, a soft pouch. Material of the soft pack may be plastic, which, for example, may be polypropylene, polybutylene terephthalate, and polybutylene succinate.

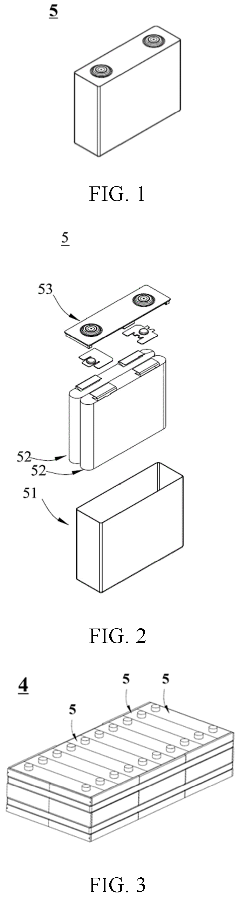

The sodium secondary battery in the present application may be cylindrical, rectangular, or of any other shapes. For example, FIG. 1 shows a sodium secondary battery 5 of a rectangular structure as an example.

In some embodiments, referring to FIG. 2, the outer package may include a casing 51 and a cover plate 53. The casing 51 may include a base plate and side plates connected to the base plate, and the base plate and the side plates enclose an accommodating cavity. The casing 51 has an opening communicating with the accommodating cavity, and the cover plate 53 can cover the opening to close the accommodating cavity. The positive electrode sheet, the negative electrode sheet, and the separator may be made into an electrode assembly 52 through winding or lamination. The electrode assembly 52 is packaged in the accommodating cavity. The electrolyte solution wets the electrode assembly 52. The sodium secondary battery 5 may include one or more electrode assemblies 52, and persons skilled in the art may make choices according to actual requirements.

In some embodiments, the sodium secondary battery may be assembled into a battery module, and the battery module may include one or more sodium secondary batteries. The specific quantity may be chosen by persons skilled in the art according to use and capacity of the battery module.

FIG. 3 shows a battery module 4 as an example. Referring to FIG. 3, in the battery module 4, a plurality of sodium secondary batteries 5 may be sequentially arranged in a length direction of the battery module 4. Certainly, the battery cells may alternatively be arranged in any other manner. Further, the plurality of sodium secondary batteries 5 may be fastened using fasteners.

Optionally, the battery module 4 may further include a shell with an accommodating space, and the plurality of sodium secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

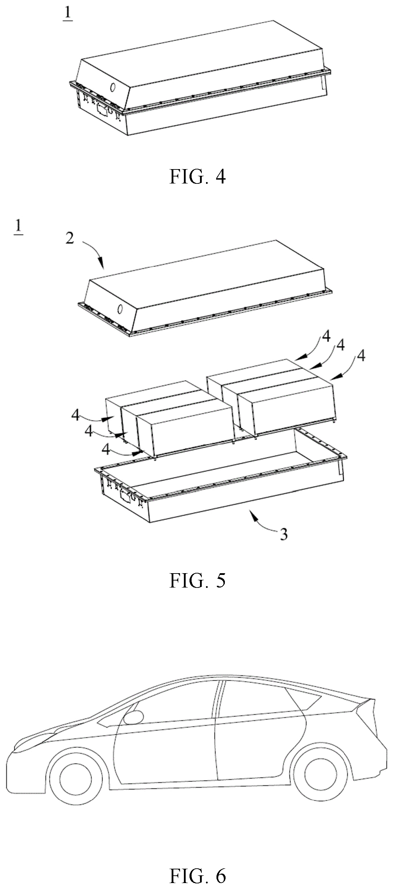

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 may be engaged with the lower box 3 to form an enclosed space for accommodating the battery modules 4. The plurality of battery modules 4 may be arranged in the battery box in any manner.

In addition, the present application further provides an electric device. The electric device includes at least one of the sodium secondary battery, the battery module, or the battery pack provided in the present application. The sodium secondary battery, battery module, or battery pack may be used as a power source for the electric device or an energy storage unit of the electric device. The electric device may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The sodium secondary battery, the battery module, or the battery pack may be selected for the electric device based on requirements for using the electric device.

FIG. 6 shows an electric device as an example. This electric device is a battery electric vehicle, a hybrid electric vehicle, a plug-in hybrid electric vehicle, or the like. To satisfy a requirement of the electric device for high power and high energy density of the sodium secondary battery, a battery pack, or a battery module may be used.

In another example, the apparatus may be a mobile phone, a tablet computer, a notebook computer, or the like. Such apparatus is generally required to be light and thin and may use a sodium secondary battery as its power source.

### Examples

The following describes examples of the present application. The examples described below are illustrative and only used to explain the present application, and cannot be construed as limitations on the present application. Examples whose techniques or conditions are not specified are made in accordance with techniques or conditions described in literature in the field, or made in accordance with product instructions. The reagents or instruments used are all conventional products that are commercially available if no manufacturer is indicated.

### I. Preparation methods

### Example 1

### (1) Electrolyte

In a glove box filled with argon atmosphere (H₂O concentration <10ppm, O₂ concentration <1ppm), propylene carbonate (PC) and methyl ethyl carbonate (EMC) were mixed at a mass ratio of 30/70, and 1 M NaPF₆ sodium salt was dissolved the mixed solvent. Thereafter, the first additive 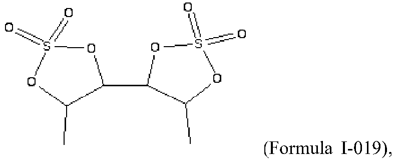 the second additive sodium difluoro(oxalato)borate, and the third additive 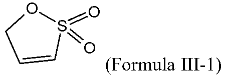 were added, and stirred evenly to prepare the electrolyte. Based on the total mass of the electrolyte, the mass percentage of the compound with the structure of Formula I-013 serving as the first additive was 1%, the mass percentage of sodium difluoro(oxalato)borate serving as the second additive was 1%, and the mass percentage of the compound having the structure shown in Formula III-1 serving as the third additive was 1%.

### (2) Preparation of positive electrode sheet

Preparation of Na_{7/9}Cu_{2/9}Fe_{1/9}Mn_{2/3}O₂ (13% Cu): 0.39 M Na₂CO₃, 0.22 M CuO, 0.06 M Fe₂O₃, and 0.67 M MnO₂ precursors were ball-milled in a ball mill for 12 h, with ethanol as a dispersant. After drying, the uniformly mixed powder was pressed into tablets at 20 MPa and sintered at 900°C for 12 h to obtain the target product. The sintered powder was required to be quickly transferred to a glove box for storage.

The above positive electrode active material Na_{7/9}Cu_{2/9}Fe_{1/9}Mn_{2/3}O₂, a conductive agent acetylene black, and a binder polyvinylidene fluoride (PVDF) were fully stirred and mixed evenly in an N-methylpyrrolidone solvent system at a weight ratio of 90:5:5 to prepare a positive electrode slurry. The positive electrode slurry was evenly applied on a 13 µm-thick positive electrode current collector aluminum foil at a loading of 0.28 g (dry weight)/1540.25 mm². The aluminum foil was air-dried at room temperature, and then transferred to an oven at 120°C for drying for 1 h, followed by cold pressing and slitting to obtain the positive electrode sheet.

### (3) Preparation of negative electrode sheet

### Preparation of negative electrode material:

Negative electrode active material: A biomass material was calcined at 800°C for 2 h in a tube furnace under an argon atmosphere, then washed with hydrochloric acid and deionized water, followed by drying. After grinding, the material was calcined at 1550°C for 4 h in a tube furnace under an argon atmosphere to obtain hard carbon.

Preparation of negative electrode sheet: The above negative electrode active material hard carbon, a conductive agent acetylene black, a binder styrene-butadiene rubber (SBR), a thickener sodium carboxymethyl cellulose (CMC-Na), and CaO were fully stirred and mixed evenly in a deionized water solvent system at a weight ratio of 90:4:4:2:0.014 to prepare a negative electrode slurry. The different gradients of Ca content in the negative electrode sheet were adjusted by adding CaO to the negative electrode slurry. The negative electrode slurry was evenly applied on a 8 µm-thick negative electrode current collector copper foil at a loading of 0.14 g (dry weight)/1540.25 mm². The copper foil was air-dried at room temperature, and then transferred to an oven at 120°C for drying for 1 h, followed by cold pressing and slitting to obtain the negative electrode sheet.

### (4) Separator

A 9 µm polyethylene (PE) porous polymer film was used as the separator.

### (5) Preparation of battery

The positive electrode sheet, the separator, and the negative electrode sheet were stacked in order, with the separator disposed between the positive and negative electrode sheets to separate the positive and negative electrode sheets. The stacked assembly was wound to obtain a bare cell, and tabs were welded. The bare cell was placed in the outer package, the above-prepared electrolyte was injected into the dried cell. Subsequent processes including encapsulation, standing, formation, shaping, and capacity testing were performed to obtain the sodium secondary battery product of Example 1.

Preparation methods of the secondary batteries in Examples 2 to 36 and the secondary batteries in Comparative Examples 1 to 9 were similar to the preparation method of the sodium secondary battery in Example 1, but compositions and product parameters of the electrode sheets of the batteries were varied. For details about different product parameters, see Tables 1 to 3.

In Examples 2 to 16, the mass percentages of the first additive, second additive, and third additive could be adjusted by adjusting the amount of the solvent in the electrolyte;
In Example 17, the first additive was 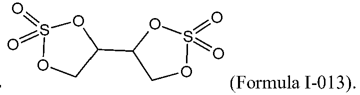
In Example 18, the first additive was 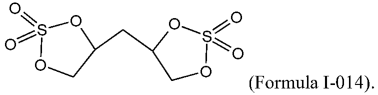
In Example 19, the first additive was 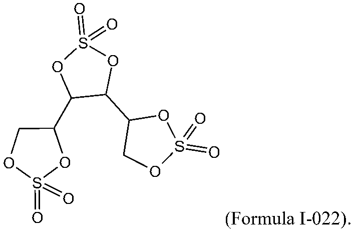
In Example 23, the third additive was 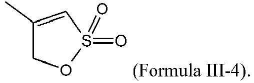
In Example 24, the third additive was 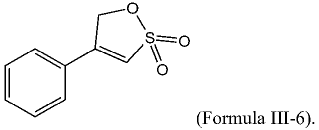
In Example 25, the third additive was 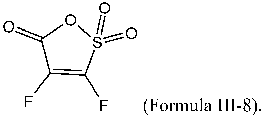
In Examples 26 to 30, the negative electrode material layers containing different mass percentages of element Ca could be adjusted by adding different mass percentages of CaO during the preparation of the negative electrode sheet.
In Examples 31 to 35, the positive electrode active materials containing different mass percentages of element Cu could be adjusted by regulating the stoichiometric ratio of the precursors Fe₂O₃, CuO, MnO₂, Na₂CO₃ during the sintering process, as well as the compounding of positive electrode materials with different contents of element Cu during the preparation of the positive electrode sheet, specifically as follows:

Preparation of Na_{1/2}Fe_{1/2}Mn_{1/2}O₂ (0% Cu): 0.25 M Na₂CO₃, 0.25 M Fe₂O₃, and 0.5 M MnO₂ precursors were ball-milled in a ball mill for 12 h, with ethanol as a dispersant. After drying, the uniformly mixed powder was pressed into tablets at 20 MPa and sintered at 900°C for 12 h to obtain the target product. The sintered powder was required to be quickly transferred to a glove box for storage.

Preparation of Na_{9/10}Cu_{2/5}Fe_{1/10}Mn_{1/2}O₂ (23% Cu): 0.45 M Na₂CO₃, 0.4 M CuO, 0.05 M Fe₂O₃, and 0.5 M MnO₂ precursors were ball-milled in a ball mill for 12 h with ethanol as a dispersant. After drying, the uniformly mixed powder was pressed into tablets at 20 MPa and sintered at 900°C for 12 h to obtain the target product. The sintered powder was required to be quickly transferred to a glove box for storage.

Example 31: The positive electrode active material Na_{1/2}Fe_{1/2}Mn_{1/2}O₂, the conductive agent acetylene black, and the binder polyvinylidene fluoride (PVDF) were fully stirred and mixed evenly in an N-methylpyrrolidone solvent system at a weight ratio of 90:5:5 to prepare a positive electrode slurry. The positive electrode slurry was evenly applied on a 13 µm-thick positive electrode current collector aluminum foil at a loading of 0.28 g (dry weight)/1540.25 mm². The aluminum foil was air-dried at room temperature, and then transferred to an oven at 120°C for drying for 1 h, followed by cold pressing and slitting to obtain the positive electrode sheet.

Example 32: The positive electrode active material 50% Na_{1/2}Fe_{1/2}Mn_{1/2}O₂, 50% Na_{7/9}Cu_{2/9}Fe_{1/9}Mn_{2/3}O₂, the conductive agent acetylene black, and the binder polyvinylidene fluoride (PVDF) were fully stirred and mixed evenly in an N-methylpyrrolidone solvent system at a weight ratio of 90:5:5 to prepare a positive electrode slurry. The positive electrode slurry was evenly applied on a 13 µm-thick positive electrode current collector aluminum foil at a loading of 0.28 g (dry weight)/1540.25 mm². The aluminum foil was air-dried at room temperature, and then transferred to an oven at 120°C for drying for 1 h, followed by cold pressing and slitting to obtain the positive electrode sheet.

Example 33: The positive electrode active material 50% Na_{7/9}Cu_{2/9}Fe_{1/9}Mn_{2/3}O₂, 50% Na_{9/10}Cu_{2/5}Fe_{1/10}Mn_{1/2}O₂, the conductive agent acetylene black, and the binder polyvinylidene fluoride (PVDF) were fully stirred and mixed evenly in an N-methylpyrrolidone solvent system at a weight ratio of 90:5:5 to prepare a positive electrode slurry. The positive electrode slurry was evenly applied on a 13 µm-thick positive electrode current collector aluminum foil at a loading of 0.28 g (dry weight)/1540.25 mm². The aluminum foil was air-dried at room temperature, and then transferred to an oven at 120°C for drying for 1 h, followed by cold pressing and slitting to obtain the positive electrode sheet.

Example 34: The positive electrode active material Na_{9/10}Cu_{2/5}Fe_{1/10}Mn_{1/2}O₂, the conductive agent acetylene black, and the binder polyvinylidene fluoride (PVDF) were fully stirred and mixed evenly in an N-methylpyrrolidone solvent system at a weight ratio of 90:5:5 to prepare a positive electrode slurry. The positive electrode slurry was evenly applied on a 13 µm-thick positive electrode current collector aluminum foil at a loading of 0.28 g (dry weight)/1540.25 mm². The aluminum foil was air-dried at room temperature, and then transferred to an oven at 120°C for drying for 1 h, followed by cold pressing and slitting to obtain the positive electrode sheet.

Example 35: The positive electrode active material Na_{9/10}Cu_{2/5}Fe_{1/10}Mn_{1/2}O₂, the conductive agent acetylene black, and the binder polyvinylidene fluoride (PVDF) were fully stirred and mixed evenly in an N-methylpyrrolidone solvent system at a weight ratio of 90:5:5 to prepare a positive electrode slurry. The positive electrode slurry was evenly applied on a 13 µm-thick positive electrode current collector aluminum foil at a loading of 0.28 g (dry weight)/1540.25 mm². The aluminum foil was air-dried at room temperature, and then transferred to an oven at 120°C for drying for 1 h, followed by cold pressing and slitting to obtain the positive electrode sheet.

In Comparative Example 8, the first additive was ethylene carbonate

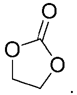

In Comparative Example 9, the third additive was vinyl sulfate 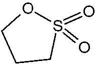 which contained no carbon-carbon double bond.

### II. Performance tests

### 1. Negative electrode sheet/positive electrode sheet

### (1) Determination of mass percentage of element Ca in negative electrode material layer

The mass percentage of element Ca in the negative electrode material layer was measured by inductively coupled plasma atomic emission spectrometry in accordance with EPA 6010D-2014.

### (2) Determination of mass percentage of element Cu in positive electrode active material

The content of element Cu in the positive electrode material layer was measured by inductively coupled plasma atomic emission spectrometry in accordance with EPA 6010D-2014, that is, the mass percentage of element Cu in the positive electrode active material = mass percentage of element Cu in the positive electrode material layer / mass percentage of positive electrode active material in the positive electrode material layer.

### 2. Battery

### (1) Volume change rate after storage at high temperature and low voltage

At 25°C, fresh sodium secondary batteries prepared in the examples and comparative examples were left to stand for 5 minutes. The batteries were charged at a constant current of 0.5C to 4.0 V, then charged at a constant voltage until the current was ≤0.05C. After standing for another 5 minutes, the batteries were discharged at a constant current of 0.5C to 1.5 V. The volume V1 of each battery was measured in a drainage method. Subsequently, the batteries were placed in an oven at 70°C and stored for one month. The batteries were taken out, and the volume was recorded as V2. the volume change rate of the battery at high temperature and low voltage was calculated by the formula:(V2-V1)/V1×100%.

### (2) Volume change rate after storage at high temperature and high voltage

At 25°C, fresh sodium secondary batteries prepared in the examples and comparative examples were left to stand for 5 minutes. The batteries were charged at a constant current of 0.5C to 4.0 V, then charged at a constant voltage until the current was ≤0.05C. the volume V3 of each battery was measured in a drainage method. Subsequently, the batteries were placed in an oven at 70°C and stored for one month. The batteries were taken out, and the volume was recorded as V4. The volume change rate of the battery at high temperature and high voltage was calculated by the formula: (V4-V3)/V3×100%.

### (3) Charging performance at -20°C

Preparation of three-electrode battery: First, a sodium vanadium phosphate reference electrode was prepared. Sodium vanadium phosphate serving as the active material, acetylene black serving as the conductive agent, and polyvinylidene fluoride (PVDF) serving as the binder were fully stirred and mixed evenly in an N-methylpyrrolidone solvent system at a weight ratio of 90:5:5 to prepare a slurry. The slurry was evenly applied on a 10 cm-long aluminum wire (with the coating area accounting for 1 cm). The target reference electrode was obtained after drying at 100 °C. During the preparation of the sodium secondary battery, the above reference electrode was disposed between the negative electrode sheet and the separator to obtain the three-electrode battery.

Fast charging capability test at -20°C: The above three-electrode batteries with the reference electrodes were charged at a constant current of 1C to a voltage of 4.0 V at 25°C, then charged at a constant voltage until the current was ≤0.05C. After standing for 5 minutes, the batteries were discharged at a constant current of 1C to 1.5 V, and the discharge capacity was recorded as C1. The batteries were then placed in a -20°C environment and left to stand for 2 h. The batteries were charged at a constant current of 0.1C to a voltage of 4.0 V, and the charging capacity before the negative electrode potential reached -3.377 V relative to the reference potential was recorded as C2. The charging performance of the battery at -20°C was calculated by the formula: C2/C1×100%.

### (4) Direct-current impedance

At 25°C, the state of charge of each battery was adjusted to 50% SOC and left to stand for 30 min. The battery voltage at this point was recorded as U1 (V). The battery was discharged at 4C for 10s, the battery voltage at this point was recorded as U2 (V). The corresponding discharge current I (mA) of the battery was 4 ×design capacity (mAh) of the battery. DC impedance was calculated as: DCR (mΩ) =(U1-U2)/I.

### (5) Cycling performance

At 25°C, the prepared batteries were charged at a constant current of 1C to 3.8 V, charged at a constant current of 0.5C to 3.9 V, charged at a constant current of 0.2C to 4.0 V, charged at a constant voltage of 4.0 V until the current dropped to 0.05C, left to stand for 10 min, and then discharged at a constant current of 1C to 1.5 V, which was defined as the first charge-discharge cycle of the battery. The discharge capacity at this point was recorded as the discharge capacity (C0) of the first cycle of the battery. The above steps were repeated for the same battery, and after the 800th cycle, the discharge capacity of the battery was recorded as (C1). The capacity retention rate after 300 cycles was calculated as: C1/C0×100%. All comparative examples and other examples adopted the same test procedures.

### III. Analysis on test results of examples and comparative examples

Batteries corresponding to each example and comparative example were prepared according to the above method. The battery parameters are listed in Table 1, Table 2, and Table 3 below, and various performance parameter test results are summarized in Table 4.

**Table 1 Electrolyte parameter table**

| No. | First additive | | Second additive | | Third additive | |
|---|---|---|---|---|---|---|
| | Type | Mass percentage (%) | Type | Mass percentage (%) | Type | Mass percentage (%) |
| Example 1 | Formula I-019 | 1 | Sodium difluoro(oxalato)borate | 1 | Formula III-1 | 1 |
| Example 2 | Formula I-019 | 0.01 | Sodium difluoro(oxalato)borate | 1 | Formula III-1 | 1 |
| Example 3 | Formula I-019 | 0.1 | Sodium difluoro(oxalato)borate | 1 | Formula III-1 | 1 |
| Example 4 | Formula I-019 | 3 | Sodium difluoro(oxalato)borate | 1 | Formula III-1 | 1 |
| Example 5 | Formula I-019 | 5 | Sodium difluoro(oxalato)borate | 1 | Formula III-1 | 1 |
| Example 6 | Formula I-019 | 5 | Sodium difluoro(oxalato)borate | 0.01 | Formula III-1 | 1 |
| Example 7 | Formula I-019 | 1 | Sodium difluoro(oxalato)borate | 0.1 | Formula III-1 | 1 |
| Example 8 | Formula I-019 | 1 | Sodium difluoro(oxalato)borate | 2 | Formula III-1 | 1 |
| Example 9 | Formula I-019 | 1 | Sodium difluoro(oxalato)borate | 5 | Formula III-1 | 1 |
| Example 10 | Formula I-019 | 1 | Sodium difluoro(oxalato)borate | 0.01 | Formula III-1 | 1 |
| Example 11 | Formula I-019 | 1 | Sodium difluoro(oxalato)borate | 1 | Formula III-1 | 0.01 |
| Example 12 | Formula I-019 | 1 | Sodium difluoro(oxalato)borate | 1 | Formula III-1 | 0.1 |
| Example 13 | Formula I-019 | 1 | Sodium difluoro(oxalato)borate | 1 | Formula III-1 | 2 |
| Example 14 | Formula I-019 | 1 | Sodium difluoro(oxalato)borate | 1 | Formula III-1 | 5 |
| Example 15 | Formula I-019 | 0.2 | Sodium difluoro(oxalato)borate | 1 | Formula III-1 | 0.5 |
| Example 16 | Formula I-019 | 2 | Sodium difluoro(oxalato)borate | 1 | Formula III-1 | 3 |
| Example 17 | Formula I-013 | 1 | Sodium difluoro(oxalato)borate | 1 | Formula III-1 | 1 |
| Example 18 | Formula I-014 | 1 | Sodium difluoro(oxalato)borate | 1 | Formula III-1 | 1 |
| Example 19 | Formula I-022 | 1 | Sodium difluoro(oxalato)borate | 1 | Formula III-1 | 1 |
| Example 20 | Formula I-01 | 1 | Lithium difluoro(oxalato)borate | 1 | Formula III-1 | 1 |
| Example 21 | Formula I-01 | 1 | Magnesium difluoro(oxalato)borate | 1 | Formula III-1 | 1 |
| Example 22 | Formula I-01 | 1 | Aluminum difluoro(oxalato)borate | 1 | Formula III-1 | 1 |
| Example 23 | Formula I-01 | 1 | Sodium difluoro(oxalato)borate | 1 | Formula III-4 | 1 |
| Example 24 | Formula I-01 | 1 | Sodium difluoro(oxalato)borate | 1 | Formula III-6 | 1 |
| Example 25 | Formula I-01 | 1 | Sodium difluoro(oxalato)borate | 1 | Formula III-8 | 1 |
| Example 26 | Formula I-019 | 1 | Sodium difluoro(oxalato)borate | 1 | Formula III-1 | 1 |
| Example 27 | Formula I-019 | 1 | Sodium difluoro(oxalato)borate | 1 | Formula III-1 | 1 |
| Example 28 | Formula I-019 | 1 | Sodium difluoro(oxalato)borate | 1 | Formula III-1 | 1 |
| Example 29 | Formula I-019 | 0.1 | Sodium difluoro(oxalato)borate | 1 | Formula III-1 | 1 |
| Example 30 | Formula I-019 | 0.1 | Sodium difluoro(oxalato)borate | 1 | Formula III-1 | 1 |
| Example 31 | Formula I-019 | 1 | Sodium difluoro(oxalato)borate | 1 | Formula III-1 | 1 |
| Example 32 | Formula I-019 | 1 | Sodium difluoro(oxalato)borate | 1 | Formula III-1 | 1 |
| Example 33 | Formula I-019 | 1 | Sodium difluoro(oxalato)borate | 1 | Formula III-1 | 1 |
| Example 34 | Formula I-019 | 1 | Sodium difluoro(oxalato)borate | 1 | Formula III-1 | 1 |
| Example 35 | Formula I-019 | 1 | Sodium difluoro(oxalato)borate | 1 | Formula III-1 | 0.1 |
| Comparative Example 1 | / | / | / | / | / | / |
| Comparative Example 2 | Formula I-019 | 1 | / | / | / | / |
| Comparative Example 3 | / | / | Sodium difluoro(oxalato)borate | 1 | / | / |
| Comparative Example 4 | / | / | / | / | Formula III-1 | 1 |
| Comparative Example 5 | Formula I-019 | 1 | Sodium difluoro(oxalato)borate | 1 | / | / |
| Comparative Example 6 | Formula I-019 | 1 | / | / | Formula III-1 | 1 |
| Comparative Example 7 | / | / | Sodium difluoro(oxalato)borate | 1 | Formula III-1 | 1 |
| Comparative Example 8 | Ethylene carbonate | 1 | Sodium difluoro(oxalato)borate | 1 | Formula III-1 | 1 |
| Comparative Example 9 | Formula I-019 | 1 | Sodium difluoro(oxalato)borate | 1 | Formula III-1 without carbon-carbon double bond | 1 |

**Table 2 Parameter relationship table of each additive in electrolyte**

| No. | Mass ratio of first additive to second additive | Sum of mass percentages of first additive and third additive | Mass ratio of second additive to third additive | Product of mass percentages of first additive, second additive, and third additive(10⁶) |
|---|---|---|---|---|
| Example 1 | 1 | 2 | 1 | 1 |
| Example 2 | 0.01 | 1.01 | 1 | 0.01 |
| Example 3 | 0.1 | 1.1 | 1 | 0.1 |
| Example 4 | 3 | 4 | 1 | 3 |
| Example 5 | 5 | 6 | 1 | 5 |
| Example 6 | 500 | 6 | 0.01 | 0.05 |
| Example 7 | 10 | 2 | 0.10 | 0.1 |
| Example 8 | 0.5 | 2 | 2.00 | 2 |
| Example 9 | 0.2 | 2 | 5.00 | 5 |
| Example 10 | 100 | 2 | 0.01 | 0.01 |
| Example 11 | 1 | 1.01 | 100.00 | 0.01 |
| Example 12 | 1 | 1.1 | 10.00 | 0.1 |
| Example 13 | 1 | 3 | 0.50 | 2 |
| Example 14 | 1 | 6 | 0.20 | 5 |
| Example 15 | 0.2 | 0.7 | 2.00 | 0.1 |
| Example 16 | 2 | 5 | 0.33 | 6 |
| Example 17 | 1 | 2 | 1 | 1 |
| Example 18 | 1 | 2 | 1 | 1 |
| Example 19 | 1 | 2 | 1 | 1 |
| Example 20 | 1 | 2 | 1 | 1 |
| Example 21 | 1 | 2 | 1 | 1 |
| Example 22 | 1 | 2 | 1 | 1 |
| Example 23 | 1 | 2 | 1 | 1 |
| Example 24 | 1 | 2 | 1 | 1 |
| Example 25 | 1 | 2 | 1 | 1 |
| Example 26 | 1 | 2 | 1 | 1 |
| Example 27 | 1 | 2 | 1 | 1 |
| Example 28 | 1 | 2 | 1 | 1 |
| Example 29 | 0.1 | 1.1 | 1 | 0.1 |
| Example 30 | 0.1 | 1.1 | 1 | 0.1 |
| Example 31 | 1 | 2 | 1 | 1 |
| Example 32 | 1 | 2 | 1 | 1 |
| Example 33 | 1 | 2 | 1 | 1 |
| Example 34 | 1 | 2 | 1 | 1 |
| Example 35 | 1 | 1.1 | 10 | 0.1 |
| Comparative Example 1 | / | / | / | / |
| Comparative Example 2 | / | / | / | / |
| Comparative Example 3 | / | / | / | / |
| Comparative Example 4 | / | / | / | / |
| Comparative Example 5 | 1 | / | / | / |
| Comparative Example 6 | / | 2 | / | / |
| Comparative Example 7 | / | / | 1 | / |
| Comparative Example 8 | 1 | 2 | 1 | 1 |
| Comparative Example 9 | 1 | 2 | 1 | 1 |

**Table 3 Parameter table of negative electrode sheet and positive electrode sheet**

| No. | Negative electrode sheet | | Positive electrode sheet | |
|---|---|---|---|---|
| | Mass percentage of Ca | Ratio of mass percentage of first additive to mass percentage of Ca | Mass percentage of Cu | Ratio of mass percentage of third additive to mass percentage of Cu |
| | (ppm) | | (%) | |
| Example 1 | 100 | 100 | 13 | 0.077 |
| Example 2 | 100 | 1 | 13 | 0.077 |
| Example 3 | 100 | 10 | 13 | 0.077 |
| Example 4 | 100 | 300 | 13 | 0.077 |
| Example 5 | 100 | 500 | 13 | 0.077 |
| Example 6 | 101 | 495 | 13 | 0.077 |
| Example 7 | 100 | 100 | 13 | 0.077 |
| Example 8 | 100 | 100 | 13 | 0.077 |
| Example 9 | 100 | 100 | 13 | 0.077 |
| Example 10 | 100 | 100 | 13 | 0.077 |
| Example 11 | 100 | 100 | 13 | 0.001 |
| Example 12 | 100 | 100 | 13 | 0.008 |
| Example 13 | 100 | 100 | 13 | 0.154 |
| Example 14 | 100 | 100 | 13 | 0.385 |
| Example 15 | 100 | 20 | 13 | 0.038 |
| Example 16 | 100 | 200 | 13 | 0.231 |
| Example 17 | 100 | 100 | 13 | 0.077 |
| Example 18 | 100 | 100 | 13 | 0.077 |
| Example 19 | 100 | 100 | 13 | 0.077 |
| Example 20 | 100 | 100 | 13 | 0.077 |
| Example 21 | 100 | 100 | 13 | 0.077 |
| Example 22 | 100 | 100 | 13 | 0.077 |
| Example 23 | 100 | 100 | 13 | 0.077 |
| Example 24 | 100 | 100 | 13 | 0.077 |
| Example 25 | 100 | 100 | 13 | 0.077 |
| Example 26 | 50 | 200 | 13 | 0.077 |
| Example 27 | 1000 | 10 | 13 | 0.077 |
| Example 28 | 3000 | 3 | 13 | 0.077 |
| Example 29 | 1000 | 1 | 13 | 0.077 |
| Example 30 | 2000 | 0.5 | 13 | 0.077 |
| Example 31 | 100 | 100 | 0 | / |
| Example 32 | 100 | 100 | 6.5 | 0.154 |
| Example 33 | 100 | 100 | 18 | 0.056 |
| Example 34 | 101 | 99 | 23 | 0.043 |
| Example 35 | 102 | 98 | 23 | 0.004 |
| Comparative Example 1 | 100 | / | 13 | / |
| Comparative Example 2 | 100 | 100 | 13 | / |
| Comparative Example 3 | 100 | / | 13 | / |
| Comparative Example 4 | 100 | / | 13 | 0.077 |
| Comparative Example 5 | 100 | 100 | 13 | / |
| Comparative Example 6 | 100 | 100 | 13 | 0.077 |
| Comparative Example 7 | 100 | / | 13 | 0.077 |
| Comparative Example 8 | 100 | 100 | 13 | 0.077 |
| Comparative Example 9 | 100 | 100 | 13 | 0.077 |

**Table 4 Battery performance test table**

| No. | Battery volume swelling rate after high-temperature 1.5 V storage (%) | Battery volume swelling rate after high-temperature 4.0 V storage (%) | Charging performance at -20°C (%) | Direct-current impedance (mΩ) | Cycling performance (%) |
|---|---|---|---|---|---|
| Example 1 | 8 | 46 | 71 | 895 | 87 |
| Example 2 | 63 | 90 | 52 | 949 | 72 |
| Example 3 | 39 | 83 | 66 | 927 | 83 |
| Example 4 | 8 | 42 | 68 | 907 | 86 |
| Example 5 | 7 | 40 | 63 | 985 | 82 |
| Example 6 | 48 | 39 | 58 | 971 | 78 |
| Example 7 | 27 | 48 | 67 | 921 | 83 |
| Example 8 | 8 | 47 | 70 | 891 | 88 |
| Example 9 | 6 | 82 | 65 | 1032 | 83 |
| Example 10 | 44 | 49 | 54 | 940 | 78 |
| Example 11 | 15 | 105 | 70 | 887 | 83 |
| Example 12 | 10 | 66 | 71 | 893 | 85 |
| Example 13 | 5 | 40 | 71 | 948 | 86 |
| Example 14 | 4 | 35 | 67 | 1215 | 84 |
| Example 15 | 72 | 105 | 49 | 1021 | 71 |
| Example 16 | 7 | 40 | 65 | 945 | 85 |
| Example 17 | 9 | 48 | 68 | 905 | 82 |
| Example 18 | 8 | 43 | 72 | 885 | 84 |
| Example 19 | 8 | 44 | 69 | 886 | 86 |
| Example 20 | 9 | 45 | 70 | 888 | 88 |
| Example 21 | 11 | 46 | 72 | 894 | 87 |
| Example 22 | 6 | 45 | 71 | 900 | 82 |
| Example 23 | 11 | 44 | 71 | 909 | 83 |
| Example 24 | 8 | 43 | 73 | 906 | 85 |
| Example 25 | 6 | 44 | 69 | 897 | 86 |
| Example 26 | 12 | 47 | 70 | 908 | 83 |
| Example 27 | 9 | 46 | 71 | 929 | 86 |
| Example 28 | 21 | 45 | 66 | 1006 | 81 |
| Example 29 | 30 | 47 | 68 | 936 | 79 |
| Example 30 | 39 | 45 | 66 | 1010 | 77 |
| Example 31 | 5 | 13 | 70 | 883 | 80 |
| Example 32 | 6 | 24 | 71 | 890 | 83 |
| Example 33 | 29 | 53 | 69 | 912 | 88 |
| Example 34 | 53 | 55 | 67 | 929 | 89 |
| Example 35 | 78 | 87 | 63 | 942 | 85 |
| Comparative Example 1 | 147 | 151 | 29 | 1313 | 60 |
| Comparative Example 2 | 114 | 115 | 35 | 1226 | 64 |
| Comparative Example 3 | 108 | 147 | 38 | 1147 | 67 |
| Comparative Example 4 | 126 | 102 | 33 | 1194 | 66 |
| Comparative Example 5 | 18 | 112 | 70 | 885 | 82 |
| Comparative Example 6 | 78 | 86 | 48 | 1057 | 70 |
| Comparative Example 7 | 69 | 95 | 49 | 975 | 68 |
| Comparative Example 8 | 87 | 96 | 34 | 1181 | 66 |
| Comparative Example 9 | 23 | 109 | 66 | 1271 | 83 |

The electrolytes in Examples 1 to 35 each include a first additive and a second additive, where the first additive includes a compound with a structure represented by Formula I-01, a compound with a structure represented by Formula I-013, a compound with a structure represented by Formula I-014, a compound with a structure represented by Formula I-019, or a compound with a structure represented by Formula I-022, the second additive includes sodium difluoro(oxalato)borate, lithium difluoro(oxalato)borate, magnesium difluoro(oxalato)borate, or aluminum difluoro(oxalato)borate, and the third additive includes a compound with a structure represented by Formula III-1, a compound with a structure represented by Formula III-4, a compound with a structure represented by Formula III-6, or a compound with a structure represented by Formula III-8. The sodium secondary batteries containing the above electrolyte all exhibit excellent storage performance, cycling performance, and fast-charging performance.

It can be seen from the comparison between Examples 1 to 25 and Comparative Example 1 that, the electrolyte including the first additive, the second additive, and the third additive helps to reduce the volume swelling rate and the direct-current impedance of the sodium secondary battery after storage at high temperature and high pressure/high temperature and low voltage, and improve the charging performance and cycling capacity retention rate of the sodium secondary battery.

It can be seen from the comparison between Examples 1, 7 to 14 and Comparative Example 2, Examples 1 to 5, 11 to 19, 23 to 25, and Comparative Example 3, and Examples 1 to 10, 17 to 22, and Comparative Example 4 that, compared with the electrolyte including only one of the first additive, the second additive, and the third additive, the electrolyte in the present application including all of the first additive, the second additive, and the third additive helps to reduce the volume swelling rate of the sodium secondary battery after storage at high temperature and high pressure/low voltage, and improve the charging performance and cycling capacity retention rate of the sodium secondary battery.

It can be seen from the comparison between Examples 1, 11 to 14 and Comparative Example 5, Examples 1, 7 to 10, and Comparative Example 6, and Examples 1 to 5, 17 to 19 and Comparative Example 7 that, compared with the electrolyte including at least two of the first additive, the second additive, and the third additive, the electrolyte in the present application including all of the first additive, the second additive, and the third additive helps to improve the volume swelling rate of the sodium secondary battery after storage at high temperature and high pressure/low voltage, and improve the cycling capacity retention rate of the sodium secondary battery.

It can be seen from the comparison between Examples 1, 17 to 25 and Comparative Examples 8 to 9 that, the present application including all of the first additive containing a compound with a structure represented by Formula I-013, Formula I-014, Formula I-019, or Formula I-022, the second additive containing difluoro(oxalato)borate, and the third additive containing a fluoroethylene carbonate compound helps to reduce the volume swelling rate and the direct-current impedance of the sodium secondary battery after storage at high temperature and high pressure/low voltage, and improve the charging performance and cycling capacity retention rate of the sodium secondary battery.

It can be seen from Examples 1 to 17 that the mass ratio of the cyclic ester compound containing a sulfate group and/or a sulfite group to difluoro(oxalato)borate is controlled to be 0.2 to 500, which enables the sodium secondary battery to exhibit a lower volume swelling rate and direct-current impedance after storage at high temperature and high pressure/low voltage, and excellent charging performance and cycling performance. The mass ratio of the cyclic ester compound containing a sulfate group and/or a sulfite group to difluoro(oxalato)borate is further controlled to be 1 to 100.

It can be seen from Examples 1 to 17 that based on the total mass of the electrolyte, the sum of the mass percentages of the cyclic ester compound containing a sulfate group and/or a sulfite group and the sultone compound containing a carbon-carbon double bond is controlled to be 0.1% to 6%, which enables the sodium secondary battery to exhibit a lower volume swelling rate and direct-current impedance after storage at high temperature and high pressure/low voltage, and excellent charging performance and cycling performance. Based on the total mass of the electrolyte, the sum of the mass percentages of the cyclic ester compound containing a sulfate group and/or a sulfite group and the sultone compound containing a carbon-carbon double bond is further controlled to be 0.5% to 5%.

It can be seen from Examples 1 to 17 that the mass ratio of the difluoro(oxalato)borate to the sultone compound containing a carbon-carbon double bond is controlled to be 0.2 to 100, which enables the sodium secondary battery to exhibit a lower volume swelling rate and direct-current impedance after storage under high temperature and high pressure/low voltage, and excellent charging performance and cycling performance. The mass ratio of the difluoro(oxalato)borate to the sultone compound containing a carbon-carbon double bond is further controlled to be 1 to 50.

It can be seen from Examples 1 to 17 that based on the total mass of the electrolyte, controlling the product of the mass percentages of the cyclic ester compound containing a sulfate group and/or a sulfite group, difluoro(oxalato)borate, and the sultone compound containing a carbon-carbon double bond to be 0.005×10⁻⁶ to 10×10⁻⁶, which enables the sodium secondary battery to exhibit a lower volume swelling rate and direct-current impedance after storage at high temperature and high pressure/low voltage, and excellent charging performance and cycling performance. Based on the total mass of the electrolyte, the product of the mass percentages of the cyclic ester compound containing a sulfate group and/or a sulfite group, difluoro(oxalato)borate, and the sultone compound containing a carbon-carbon double bond is further controlled to be 0.01×10⁻⁶ to 5×10⁻⁶.

It can be seen from Examples 1 to 5 that based on the total mass of the electrolyte, the mass percentage of the compound having the structure represented by Formula I-019 as the first additive is controlled to be 0.01% to 5%, which enables the sodium secondary battery to exhibit a lower volume swelling rate and direct-current impedance after storage at high temperature and high pressure/high temperature and low voltage, and excellent charging performance and cycling performance. It can be seen from the comparison between Examples 1, 3 to 4 and Example 1.5 that based on the total mass of the electrolyte, the mass percentage of the compound with the structure represented by Formula I-019 as the first additive is further controlled to be 0.1% to 3%, which helps to further reduce the direct-current impedance of the sodium secondary battery and improve fast-charging performance and cycling capacity retention rate of the sodium secondary battery.

It can be seen from Examples 1, 7 to 10 that based on the total mass of the electrolyte, the mass percentage of sodium difluoro(oxalato)borate as the second additive is controlled to be 0.01% to 5%, which enables the sodium secondary battery to exhibit a lower volume swelling rate and direct-current impedance after storage at high temperature and high pressure/high temperature and low voltage, and excellent charging performance and cycling performance. It can be seen from the comparison between Examples 1.7 to 8 and Examples 9 to 10 that based on the total mass of the electrolyte, the mass percentage of sodium difluoro(oxalato)borate as the second additive is further controlled to be 0.1% to 2% helps to reduce the volume swelling rate and direct-current impedance of the sodium secondary battery after storage under high temperature and high voltage and improve the charging performance of the sodium secondary battery.

It can be seen from Examples 1, 11 to 14 that based on the total mass of the electrolyte, the mass percentage of the compound having the structure represented by Formula III-1 as the third additive is controlled to be 0.01% to 5%, which enables the sodium secondary battery to exhibit a lower volume swelling rate and direct-current impedance after storage at high temperature and high pressure/high temperature and low voltage, and excellent charging performance and cycling performance. It can be seen from the comparison between Examples 1, 12 to 13 and Example 11 that, the mass percentage of the compound having the structure represented by Formula III-1 as the third additive is further controlled to be 0.1% to 2%, which helps to further reduce the direct-current impedance of the sodium secondary battery and improve its fast-charging performance and cycling capacity retention rate.

It can be seen from Examples 1, 17 to 25 that, the first additive includes a compound with a structure represented by Formula I-01, a compound with a structure represented by Formula I-013, a compound with a structure represented by Formula I-014, a compound with a structure represented by Formula I-019, or a compound with a structure represented by Formula I-022, the second additive includes sodium difluoro(oxalato)borate, lithium difluoro(oxalato)borate, magnesium difluoro(oxalato)borate, or aluminum difluoro(oxalato)borate, and the third additive includes a compound with a structure represented by Formula III-1, a compound with a structure represented by Formula III-2, a compound with a structure represented by Formula III-3, or a compound with a structure represented by Formula III-9, all of which enable the sodium secondary battery to exhibit a lower volume swelling rate and direct-current impedance of the sodium secondary battery after storage at high temperature and high pressure/high temperature and low voltage, and excellent charging performance and cycling performance.

It can be seen from the comparison between Examples 1, 26 to 29 and Example 30 that the ratio of the mass percentage of the first additive in the electrolyte to the mass percentage of element Ca in the negative electrode material layer is controlled to be greater than or equal to 1, which helps to reduce the volume swelling rate and direct-current impedance of the sodium secondary battery after storage at high temperature and low voltage, and improve the fast-charging performance and cycling capacity retention rate of the sodium secondary battery.

It can be seen from Examples 1, 26 to 28 that the mass percentage of element Ca in the negative electrode material layer is controlled to be 50ppm to 3000ppm, which enables the sodium secondary battery to exhibit a lower volume swelling rate and direct-current impedance after storage at high temperature and high pressure/high temperature and low voltage, and excellent charging performance and cycling performance. It can be seen from the comparison between Examples 1, 26 to 27 and Example 28 that, the mass percentage of element Ca in the negative electrode material layer is further controlled to be 50ppm to 1000ppm, which helps to further reduce the volume swelling rate and direct-current impedance of the sodium secondary battery after storage at high temperature and low voltage, and improve the fast-charging performance and cycling capacity retention rate of the sodium secondary battery.

It can be seen from the comparison between Examples 1, 32 to 35 and Example 31 that element Cu is added into the positive electrode active material, which helps to improve the cycling performance of the sodium secondary battery.

It can be seen from Examples 1, 32 to 35 that the ratio of the mass percentage of the first additive in the electrolyte to the mass percentage of element Cu in the positive electrode active material is controlled to be greater than or equal to 0.002, which enables the sodium secondary battery to exhibit a lower volume swelling rate and direct-current impedance after storage at high temperature and high pressure/low voltage, and excellent charging performance and cycling performance.

It can be seen from Examples 1, 32 to 34 that the mass percentage of element Cu in the positive electrode active material is controlled to be less than or equal to 23%, which enables the sodium secondary battery to exhibit a lower volume swelling rate and direct-current impedance after storage at high temperature and high pressure/high temperature and low voltage, and excellent charging performance and cycling performance. It can be seen from the comparison between Examples 1, 32 to 33 and Example 34 that, the mass percentage of element Cu in the positive electrode active material is controlled to be 6.5% to 18%, which helps to further reduce the volume swelling rate and direct-current impedance of the sodium secondary battery after storage at high temperature and low voltage/high temperature and high pressure, and improve the fast-charging performance of the sodium secondary battery.

It should be noted that the present application is not limited to the foregoing embodiments. The foregoing embodiments are merely examples, and embodiments having substantially the same constructions and the same effects as the technical idea within the scope of the technical solutions of the present application are all included in the technical scope of the present application. In addition, without departing from the essence of the present application, various modifications made to the embodiments that can be conceived by persons skilled in the art, and other manners constructed by combining some of the constituent elements in the embodiments are also included in the scope of the present application.

## Claims

1. An electrolyte for a sodium secondary battery, comprising a first additive, a second additive, and a third additive, wherein the first additive comprises a cyclic ester compound containing a sulfate group and/or a sulfite group, the second additive comprises difluoro(oxalato)borate, and the third additive comprises a sultone compound containing a carbon-carbon double bond.

2. The electrolyte according to claim 1, wherein the cyclic ester compound containing a sulfate group and/or a sulfite group comprises at least one of a compound with a structure represented by Formula I-1 and a compound with a structure represented by Formula I-2: 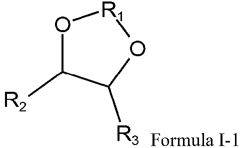 and 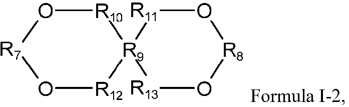 wherein
in Formula I-1, R₁ comprises 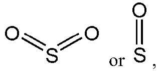 R₂ and R₃ are each independently selected from at least one of 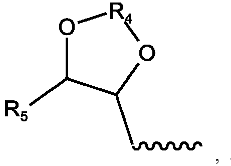 a hydrogen atom, C1-C6 alkyl, a halogen atom, C1-C3 haloalkyl, C1-C3 alkoxy, C1-C3 haloalkoxy, C1-C3 alkenyl, ester group, cyano group, and sulfonic acid group, and at least one of R₂ and R₃ comprises 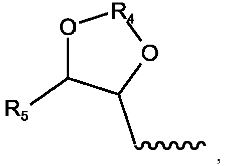 R₄ comprises at least one of 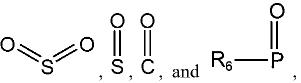 and R₅ and R₆ are each independently selected from at least one of 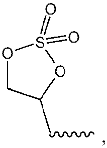 a hydrogen atom, C1-C6 alkyl, a halogen atom, C1-C3 haloalkyl, C1-C3 alkoxy, C1-C3 haloalkoxy, C1-C3 alkenyl, ester group, cyano group, and sulfonic acid group;
in Formula I-2, R₇ comprises 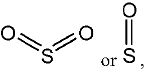 R₈ comprises at least one of 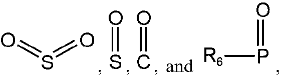 R₉ comprises at least one of C, C-R₁₄-C, and 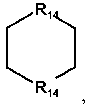 R₁₄ comprises at least one of a single bond, C1-C6 alkyl, C1-C6 ether group, and C1-C3 alkoxy, and R₁₀, R₁₁, R₁₂, and R₁₃ are each independently selected from at least one of a single bond and C1-C3 alkylene; and/or
the difluoro(oxalato)borate comprises a compound represented by Formula II,
(F₂C₂O₄B)_{y}M^{y+} Formula II:
in Formula II, M^{y+} comprises one or more of Li⁺, Na⁺, K⁺, Rb⁺, Cs⁺, Mg²⁺, Ca²⁺, Ba²⁺, Fe²⁺, Ni²⁺, Al³⁺, Fe³⁺, Ni³⁺, and y=1, 2, or 3; and/or
the sultone compound containing a carbon-carbon double bond comprises a compound with a structure represented by Formula III: 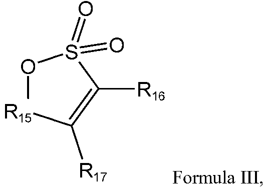 wherein
in Formula III, R₁₅ comprises at least one of alkylene, alkoxy, carbonyl, and haloalkylene, and R₁₆ and R₁₇ are each independently selected from at least one of a hydrogen atom, C1-C6 alkyl, a halogen atom, C1-C3 haloalkyl, C1-C3 alkoxy, C1-C3 haloalkoxy, phenyl, amino, amine group, silyl group, C1-C3 alkenyl, ester group, cyano group, and sulfonic acid group.

3. The electrolyte according to claim 1 or 2, wherein in Formula I-1, R₁ comprises 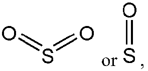 R₂ and R₃ are each independently selected from at least one of 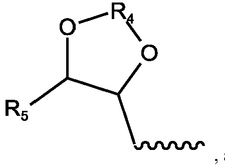 a hydrogen atom, C1-C6 alkyl, and a halogen atom, at least one of R₂ and R₃ comprises 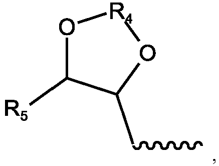 R₄ comprises at least one of 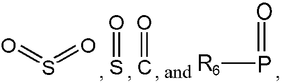 and R₅ and R₆ are each independently selected from at least one of a hydrogen atom, C1-C6 alkyl, and a halogen atom; and/or
in Formula I-2, R₇ comprises 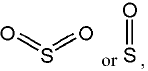 R₈ comprises at least one of 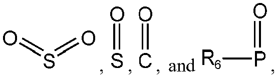 R₉ comprises at least one of C and C-R₁₄-C, R₁₄ comprises at least one of a single bond, C1-C6 alkyl, and C1-C6 ether group, and R₁₀, R₁₁, R₁₂, and R₁₃ are each independently selected from at least one of a single bond and C1-C3 alkylene.

4. The electrolyte according to any one of claims 1 to 3, wherein the cyclic ester compound containing a sulfate group and/or a sulfite group comprises at least one of

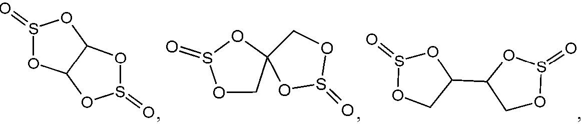

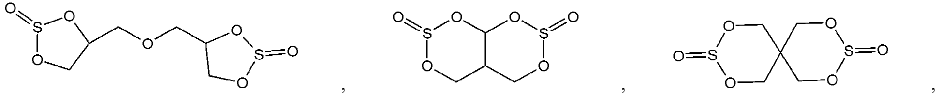

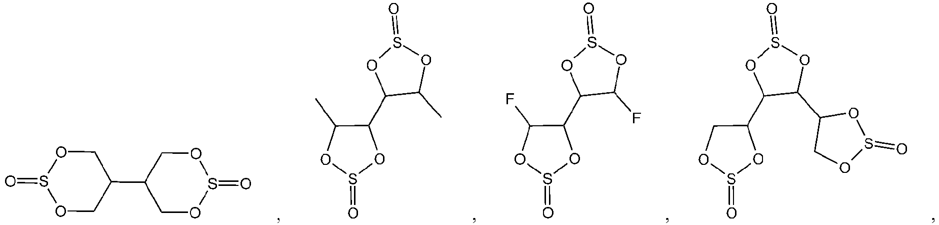

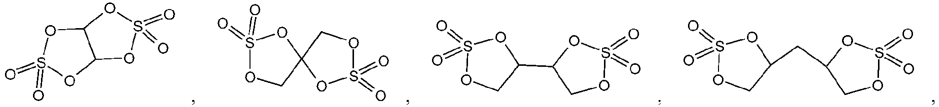

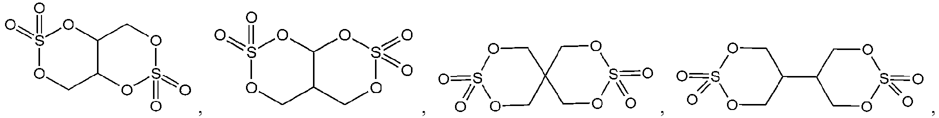

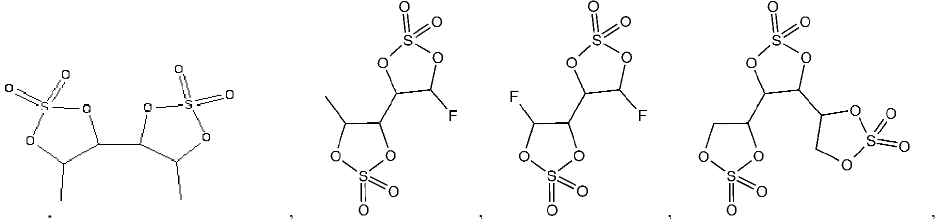

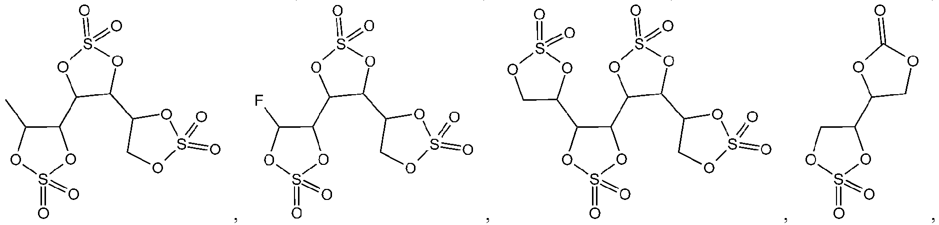

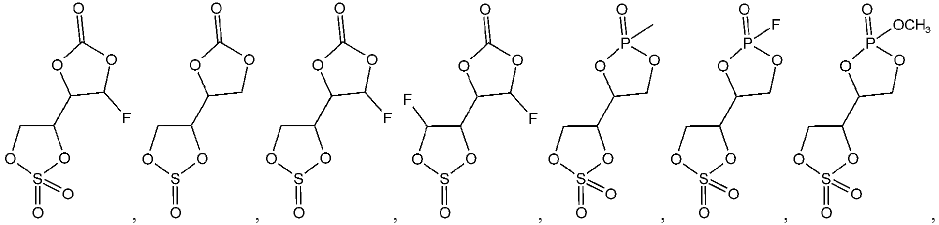

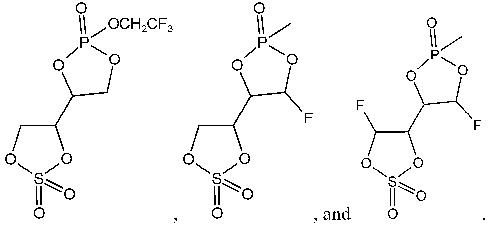

5. The electrolyte according to any one of claims 1 to 4, wherein the cyclic ester compound containing a sulfate group and/or a sulfite group comprises at least one of

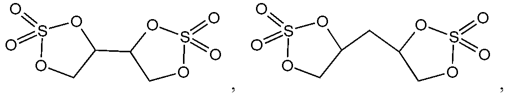

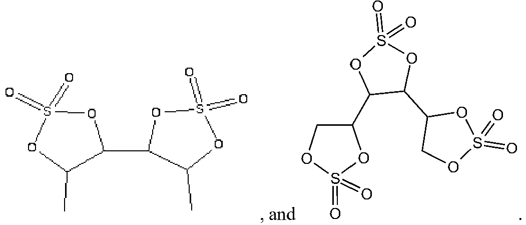

6. The electrolyte according to any one of claims 2 to 5, wherein in Formula II, M^{y+} comprises at least one of Li⁺ and Na⁺.

7. The electrolyte according to any one of claims 2 to 6, wherein in Formula III, R₁₅ comprises at least one of alkylene, carbonyl, and haloalkylene, and R₁₆ and R₁₇ are each independently selected from at least one of a hydrogen atom, C1-C6 alkyl, a halogen atom, C1-C3 alkoxy, phenyl, amino, and silyl group.

8. The electrolyte according to any one of claims 2 to 7, wherein the structure represented by Formula III comprises at least one of

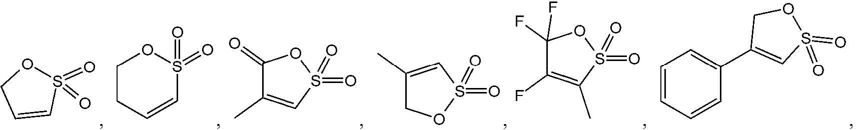

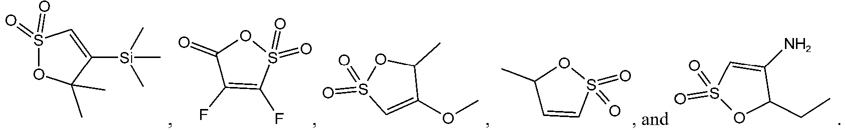

9. The electrolyte according to any one of claims 1 to 8, wherein a mass ratio of the cyclic ester compound containing a sulfate group and/or a sulfite group to the difluoro(oxalato)borate is 0.2 to 500.

10. The electrolyte according to any one of claims 1 to 9, wherein the mass ratio of the cyclic ester compound containing a sulfate group and/or a sulfite group to the difluoro(oxalato)borate is 1 to 100.

11. The electrolyte according to any one of claims 1 to 10, wherein based on a total mass of the electrolyte, a sum of mass percentages of the cyclic ester compound containing a sulfate group and/or a sulfite group and the sultone compound containing a carbon-carbon double bond is 0.1% to 6%.

12. The electrolyte according to any one of claims 1 to 11, wherein based on the total mass of the electrolyte, the sum of the mass percentages of the cyclic ester compound containing a sulfate group and/or a sulfite group and the sultone compound containing a carbon-carbon double bond is 0.5% to 5%.

13. The electrolyte according to any one of claims 1 to 12, wherein a mass ratio of the difluoro(oxalato)borate to the sultone compound containing a carbon-carbon double bond is 0.2 to 100.

14. The electrolyte according to any one of claims 1 to 13, wherein the mass ratio of the difluoro(oxalato)borate to the sultone compound containing a carbon-carbon double bond is 1 to 50.

15. The electrolyte according to any one of claims 1 to 14, wherein based on the total mass of the electrolyte, a product of mass percentages of the cyclic ester compound containing a sulfate group and/or a sulfite group, the difluoro(oxalato)borate, and the sultone compound containing a carbon-carbon double bond is 0.005×10⁻⁶ to 10×10⁻⁶.

16. The electrolyte according to any one of claims 1 to 15, wherein based on the total mass of the electrolyte, the product of the mass percentages of the cyclic ester compound containing a sulfate group and/or a sulfite group, the difluoro(oxalato)borate, and the sultone compound containing a carbon-carbon double bond is 0.01×10⁻⁶ to 5×10⁻⁶.

17. The electrolyte according to any one of claims 1 to 16, wherein based on the total mass of the electrolyte, a mass percentage of the cyclic ester compound containing a sulfate group and/or a sulfite group is 0.01% to 5%.

18. The electrolyte according to any one of claims 1 to 17, wherein based on the total mass of the electrolyte, the mass percentage of the cyclic ester compound containing a sulfate group and/or a sulfite group is 0.1% to 3%.

19. The electrolyte according to any one of claims 1 to 18, wherein based on the total mass of the electrolyte, a mass percentage of the difluoro(oxalato)borate is 0.01% to 5%.

20. The electrolyte according to any one of claims 1 to 19, wherein based on the total mass of the electrolyte, the mass percentage of the difluoro(oxalato)borate is 0.1% to 2%.

21. The electrolyte according to any one of claims 1 to 20, wherein based on the total mass of the electrolyte, a mass percentage of the sultone compound containing a carbon-carbon double bond is 0.01% to 5%.

22. The electrolyte according to any one of claims 1 to 21, wherein based on the total mass of the electrolyte, the mass percentage of the sultone compound containing a carbon-carbon double bond is 0.1% to 2%.

23. A sodium secondary battery, comprising a positive electrode sheet, a negative electrode sheet, and the electrolyte according to any one of claims 1 to 22.

24. The sodium secondary battery according to claim 23, wherein the positive electrode sheet comprises a positive electrode current collector and a positive electrode material layer disposed on at least one side of the positive electrode current collector, wherein the positive electrode material layer further comprises a positive electrode active material, and the positive electrode active material comprises a layered transition metal oxide.

25. The sodium secondary battery according to claim 23 or 24, wherein the layered transition metal oxide comprises NaₐM_{b}Fe_{c}O₂, wherein M comprises at least one of Sc, Ti, V, Cr, Mn, Co, Ni, Cu, Zn, Zr, Nb, Mo, Sn, Hf, Ta, W, and Pb, 0.67<a<1.1, 0.5<b<1, and 0<c<0.5.

26. The sodium secondary battery according to claim 24 or 25, wherein the positive electrode material layer comprises a layered transition metal oxide containing element Cu; wherein
a ratio of the mass percentage of the sultone compound containing a carbon-carbon double bond in the electrolyte to a mass percentage of element Cu in the positive electrode active material is greater than or equal to 0.002, and the mass percentage of element Cu is based on a total mass of the positive electrode active material.

27. The sodium secondary battery according to any one of claims 23 to 26, wherein based on the total mass of the positive electrode active material, the mass percentage of element Cu in the positive electrode active material is less than or equal to 23%.

28. The sodium secondary battery according to any one of claims 23 to 27, wherein based on the total mass of the positive electrode active material, the mass percentage of element Cu in the positive electrode active material is 5% to 20%.

29. The sodium secondary battery according to any one of claims 23 to 28, wherein the negative electrode sheet comprises a negative electrode current collector and a negative electrode material layer disposed on at least one side of the negative electrode current collector, and the negative electrode material layer comprises element Ca; wherein
a ratio of the mass percentage of the cyclic ester compound containing a sulfate group and/or a sulfite group in the electrolyte to a mass percentage of element Ca in the negative electrode material layer is greater than or equal to 1, and the mass percentage of element Ca is based on a total mass of the negative electrode material layer.

30. The sodium secondary battery according to any one of claims 23 to 29, wherein based on the total mass of the negative electrode material layer, the mass percentage of element Ca in the negative electrode material layer is 1ppm to 3000ppm.

31. The sodium secondary battery according to any one of claims 23 to 30, wherein based on the total mass of the negative electrode material layer, the mass percentage of element Ca in the negative electrode material layer is 50ppm to 1000ppm or 100ppm to 1000ppm.

32. The sodium secondary battery according to any one of claims 23 to 31, wherein the negative electrode material layer further comprises a negative electrode active material, and the negative electrode active material comprises one or more of hard carbon, tin alloy, and metal oxide.

33. An electric device comprising the sodium secondary battery according to any one of claims 23 to 32.
